(19) **Europäisches Patentamt / European Patent Office / Office européen des brevets**

(11) **EP 4 316 633 A1**

(12) **EUROPEAN PATENT APPLICATION**
published in accordance with Art. 153(4) EPC

(43) Date of publication:
**07.02.2024 Bulletin 2024/06**

(21) Application number: **22780530.6**

(22) Date of filing: **25.03.2022**

(51) International Patent Classification (IPC):
**B01D 69/10** *(2006.01)*      **B01D 69/12** *(2006.01)*
**D21H 13/24** *(2006.01)*

(52) Cooperative Patent Classification (CPC):
**B01D 69/10; B01D 69/12; D21H 13/24**

(86) International application number:
**PCT/JP2022/014217**

(87) International publication number:
**WO 2022/210316 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021  JP 2021060281
31.03.2021  JP 2021060282**

(71) Applicant: **Mitsubishi Paper Mills Limited
Tokyo 130-0026 (JP)**

(72) Inventors:
• **MIYASHIRO, Keisuke**
  **Tokyo 130-0026 (JP)**
• **YOSHIDA, Mitsuo**
  **Tokyo 130-0026 (JP)**
• **NOGAMI, Yuri**
  **Tokyo 130-0026 (JP)**
• **ESUMI, Shinichi**
  **Tokyo 130-0026 (JP)**

(74) Representative: **Kraus & Lederer
Patentanwälte PartGmbB
Thomas-Wimmer-Ring 15
80539 München (DE)**

(54) **SEMIPERMEABLE MEMBRANE SUPPORT AND METHOD FOR MANUFACTURING SEMIPERMEABLE MEMBRANE SUPPORT**

(57)    An object of the present invention is to provide a semipermeable membrane support in which: a semipermeable membrane has few defects, a semipermeable membrane solution is unlikely to bleed through, and a membrane peel strength between the semipermeable membrane and the semipermeable membrane support is improved; or a semipermeable membrane support having few defects of the semipermeable membrane and having an increased salt rejection rate. A semipermeable membrane support including a wet nonwoven fabric containing main synthetic fibers and binder synthetic fibers, in which: a fiber orientation strength of a coating surface on which a semipermeable membrane is provided is 1.00 or more and 1.30 or less, and a fiber orientation strength of a non-coating surface is 1.00 or more and 1.50 or less, and when the semipermeable membrane is peeled off at an interface between the semipermeable membrane and the semipermeable membrane support, an average area of the semipermeable membrane remaining on the coating surface of the semipermeable membrane support is 500 $\mu m^2$ or less, and a residual ratio of the semipermeable membrane is 2.5% or more and 5.0% or less; or the number of loose fibers in a tape peeling test is 30 or less, and a level difference of a core portion obtained by measuring surface roughness of a coating surface on which a semipermeable membrane is provided using a confocal laser microscope is 14 $\mu m$ or less.

**Description**

TECHNICAL FIELD

The present invention relates to a semipermeable membrane support and a method for manufacturing a semipermeable membrane support.

BACKGROUND ART

Semipermeable membranes are widely used in the fields of seawater desalination, water purifiers, food concentration, wastewater treatment, medical use typified by blood filtration, ultrapure water production for semiconductor cleaning, and the like. The semipermeable membrane is made of a synthetic resin such as a cellulose-based resin, a polysulfone-based resin, a polyacrylonitrile-based resin, a fluorine-based resin, or a polyester-based resin. However, when used alone, the semipermeable membrane has poor mechanical strength, and therefore is used as a "separation membrane" which is a form of a composite in which a semipermeable membrane is provided on one surface of a semipermeable membrane support made of a fiber base material such as a nonwoven fabric or a woven fabric. The surface of the semipermeable membrane support on which the semipermeable membrane is provided is referred to as a "coating surface", and the opposite surface is referred to as a "non-coating surface".

As the semipermeable membrane support, a nonwoven fabric containing synthetic fibers is mainly used. In particular, polyester-based wet nonwoven fabrics are often used (see, for example, Patent Literatures 1 and 2). Conventionally, antimony compounds represented by antimony trioxide have been widely used as polymerization catalysts for polyester fibers constituting these semipermeable membrane supports. Antimony trioxide is inexpensive and has excellent catalytic activity, but in recent years, problems for the safety of antimony have been pointed out in various countries including Europe and the United States from the viewpoint of the environment.

In addition, examples of the performance required for the semipermeable membrane support include good adhesiveness between the semipermeable membrane and the semipermeable membrane support, the semipermeable membrane solution does not bleed through to the non-coating surface when the semipermeable membrane solution is applied to the semipermeable membrane support in order to provide the semipermeable membrane, the semipermeable membrane has few defects, and the semipermeable membrane is not peeled off from the semipermeable membrane support.

When separation is performed using the semipermeable membrane, to address the situation where impurities contained in water are deposited on the surface of the semipermeable membrane and clogging of the semipermeable membrane or a permeation flux is reduced, membrane washing may be performed with a high-pressure water stream. When the peel strength between the semipermeable membrane and the semipermeable membrane support is low, the semipermeable membrane is peeled off from the semipermeable membrane support, and the semipermeable membrane is damaged, so that sufficient membrane performance cannot be obtained. In addition, when the semipermeable membrane is peeled off from the semipermeable membrane support due to the reverse flow of the permeate water in an event of stoppage of high-pressure operation of the semipermeable membrane, the semipermeable membrane performance is deteriorated.

For the purpose of improving the uniformity of the semipermeable membrane support so that the semipermeable membrane solution does not bleed through, there has been proposed a method in which, in a step of forming a nonwoven fabric by wet papermaking from a fiber slurry in which synthetic fibers are dispersed in water, the fiber content concentration of the fiber slurry during papermaking is set to 0.01 to 0.1 mass%, and the fiber slurry is made to contain a water-soluble polymer having a molecular weight of 5 million or more as a polymer viscosity agent in an amount of 3 to 15 mass% based on the fiber content mass to perform papermaking (see, for example, Patent Literature 3). However, since the polymer viscosity agent is excessively added, the uniformity is improved, but the viscosity of the fiber slurry on the papermaking mesh is increased, so that the dewaterability from the papermaking mesh is deteriorated, and the problem that the production speed cannot be increased may occur. In addition, there is also a problem that a polymer viscosity agent remains on the fiber surface forming the semipermeable membrane support after papermaking.

In addition, a semipermeable membrane support including a nonwoven fabric having a multilayer structure based on a double structure of a surface layer (thick fiber layer) having a large surface roughness using thick fibers and a back surface layer (thin fiber layer) having a dense structure using thin fibers has been proposed (see, for example, Patent Literature 4). Specifically, a semipermeable membrane support having a thick fiber layer as a coating surface and a thin fiber layer as a non-coating surface, and a semipermeable membrane support having a thin fiber layer sandwiched between thick fiber layers and having both the coating surface and the non-coating surface as the thick fiber layers are described. However, since the thick fibers are used on the coating surface, the uniformity of the semipermeable membrane support is reduced, and permeation through the semipermeable membrane is non-uniform. Therefore, sufficient membrane peel strength cannot be obtained, and there is a problem that membrane peeling occurs when the separation membrane using the above-mentioned semipermeable membrane support is operated at high pressure. In addition, there is a problem that the smoothness is low and a defect easily occurs in the semipermeable membrane. In addition, there is a problem that the semipermeable membrane solution enters the inside of the semipermeable membrane support, and a large amount of semipermeable membrane solution is required in order to obtain a desired thickness of the semipermeable membrane.

In addition, in order to solve the problem of producing a non-uniform semipermeable membrane by curving the semipermeable membrane support in the width direction when the semipermeable membrane solution is applied, there has been proposed a semipermeable membrane support in which the tensile strength ratio between the paper making flow direction and the width direction is 2:1 to 1:1, and the orientation of fibers is in a loose state (see, for example, Patent Literature 1). Furthermore, Patent Literature 1 proposes a method for adjusting the air permeability and pore size of the semipermeable membrane support for the purpose of improving the adhesiveness between the semipermeable membrane and the semipermeable membrane support and reducing bleed-through. However, the air permeability in accordance with JIS L 1096 is calculated based on the amount of air passing from one side of the semipermeable membrane support to another side through the inside of the semipermeable membrane support, and does not accurately reflect the bleed-through of the semipermeable membrane solution applied to the surface of the coating surface to the non-coating surface. Therefore, when the semipermeable membrane solution is applied to the semipermeable membrane support having air permeability in the range described in Patent Literature 1, the semipermeable membrane solution may bleed through.

In order to provide a composite semipermeable membrane having both strength and water permeability, there has been provided a composite (composite semipermeable membrane) of a semipermeable membrane and a semipermeable membrane support in which the sum (A + B) of the weight A per unit of the semipermeable membrane support and the weight B (permeation amount) of a dope that has permeated the semipermeable membrane support is 30 to 100 g/m$^2$, and the ratio B/A of the weight A to the weight B is 0.10 to 0.60 (for example, Patent Literature 5). However, since the porosity of the semipermeable membrane support is 65% or more, during formation of the semipermeable membrane, the semipermeable membrane solution may reach the back surface (non-coating surface) from the coating surface and the bleed-through may occur.

In addition, in Patent Literature 6, in order to solve the problem that when the semipermeable membrane solution is applied to a defect portion present locally in spots on a wet nonwoven fabric sheet that is a semipermeable membrane support, the permeability of the semipermeable membrane solution is partially changed to make the semipermeable membrane solution difficult to permeate, so that the thickness of the semipermeable membrane in this portion may be extremely thin, or the surface of the semipermeable membrane may be wrinkled, a method of optimizing the number of times of hot press processing, the temperature, and the type of roll of the wet nonwoven fabric has been proposed for the purpose of making it difficult to generate a low density defect that is a place where the sheet density is low in a sparse state of synthetic fibers constituting the wet nonwoven fabric. Then, Patent Literature 6 proposes a semipermeable membrane support in which the sheet density and the pressure loss are adjusted as a semipermeable membrane support which has no low density defects, is uniform, has good adhesiveness between the semipermeable membrane and the semipermeable membrane support, and can restrain the semipermeable membrane from being non-uniform due to excessive permeation of the semipermeable membrane solution into the wet nonwoven fabric. However, even in the semipermeable membrane support having a sheet density and a pressure loss in the range described in Patent Literature 5, defects of the semipermeable membrane due to protrusions of the semipermeable membrane support may occur.

Further, Patent Literature 7 proposes a semipermeable membrane support for treatment of membrane separation activated sludge, which is a nonwoven fabric containing drawn polyester fibers and undrawn polyester fibers, has a density of 0.50 to 0.70 g/cm$^3$, and has an internal bond strength of 490 mJ or more, in order to obtain a semipermeable membrane support for treatment of membrane separation activated sludge, which has few defects generated in a membrane forming step of a semipermeable membrane and has good adhesiveness to a resin frame holding a semipermeable membrane. Then, in Examples, the surface strength of the semipermeable membrane support was evaluated. Specifically, a transparent adhesive tape was uniformly attached to the surface of the semipermeable membrane support so that air did not enter. The transparent adhesive tape was slowly peeled off after being sufficiently pressed. The state of the fiber remaining on the adhesive surface of the transparent adhesive tape was visually evaluated to evaluate whether or not the fiber adhered to the adhesive tape, which was used as an index of fiber falling off when a semipermeable membrane was provided. However, the film formability and defects of the semipermeable membrane were not evaluated.

In addition, Patent Literature 8 proposes a semipermeable membrane support having a basis weight within a range of 10 to 200 g/m$^2$, a maximum height of surface roughness of the front or back surface within 500 μm, and a difference in surface roughness between the front and back surfaces of 30 μm or more, in order to obtain a semipermeable membrane support having excellent performance and processability. However, although the semipermeable membrane was applied to the semipermeable membrane support obtained in Examples and the processability was evaluated, the defect of the semipermeable membrane caused by the semipermeable membrane support and the salt rejection rate after formation of the semipermeable membrane were not evaluated.

CITATION LIST

PATENT LITERATURE

Patent Literature 1: JP-A-2002-095937
Patent Literature 2: JP-A-10-225630
Patent Literature 3: JP-A-2008-238147
Patent Literature 4: JP-B-04-021526
Patent Literature 5: WO 2014/192883 A
Patent Literature 6: WO 2012/090874 A
Patent Literature 7: JP-A-2016-159197
Patent Literature 8: JP-A-2018-153758

SUMMARY OF INVENTION

PROBLEMS TO BE SOLVED BY INVENTION

A first object of the present invention is to provide a semipermeable membrane support in which the semipermeable membrane has few defects, the semipermeable membrane solution is unlikely to bleed through, and the membrane peel strength between the semipermeable membrane and the semipermeable membrane support is increased.
A second object of the present invention is to provide a semipermeable membrane support having few defects of the semipermeable membrane and having an increased salt rejection rate.

SOLUTION TO PROBLEMS

The above problems have been solved by the following means.

(1) A semipermeable membrane support including a wet nonwoven fabric containing main synthetic fibers and binder synthetic fibers, in which a fiber orientation strength of a coating surface on which a semipermeable membrane is provided is 1.00 or more and 1.30 or less, and a fiber orientation strength of a non-coating surface is 1.00 or more and 1.50 or less, and when the semipermeable membrane is peeled off at an interface between the semipermeable membrane and the semipermeable membrane support, an average area of the semipermeable membrane remaining on the coating surface of the semipermeable membrane support is 500 $\mu m^2$ or less, and a residual ratio of the semipermeable membrane is 2.5% or more and 5.0% or less.
(2) A semipermeable membrane support including a wet nonwoven fabric containing main synthetic fibers and binder synthetic fibers, in which the number of loose fibers in a tape peeling test is 30 or less, and a level difference of a core portion obtained by measuring surface roughness of a coating surface on which a semipermeable membrane is provided using a confocal laser microscope is 14 $\mu m$ or less.
(3) The semipermeable membrane support according to (1) or (2), in which an antimony element elution amount in the main synthetic fiber or the binder synthetic fiber is less than 5 $\mu g/g$.
(4) The semipermeable membrane support according to (1) or (2), in which an antimony element elution amount of the semipermeable membrane support is less than 1.5 $\mu g/g$.
(5) A method for manufacturing the semipermeable membrane support according to any one of (1) to (4), the method comprising manufacturing the semipermeable membrane support by a wet papermaking method from fiber dispersion liquid obtained by dispersing binder synthetic fibers and then dispersing main synthetic fibers.

EFFECTS OF INVENTION

According to the present invention (1), it is possible to obtain a semipermeable membrane support in which the semipermeable membrane has few defects, the semipermeable membrane solution is unlikely to bleed through, and the membrane peel strength between the semipermeable membrane and the semipermeable membrane support is increased.
According to the present invention (2), it is possible to obtain a semipermeable membrane support having few defects of the semipermeable membrane and having an increased salt rejection rate.

DESCRIPTION OF EMBODIMENTS

<Present Invention (1)>

A semipermeable membrane support of the present invention (1) is a semipermeable membrane support including a wet nonwoven fabric containing main synthetic fibers and binder synthetic fibers, in which a fiber orientation strength of a coating surface on which a semipermeable membrane is provided is 1.00 or more and 1.30 or less, and a fiber orientation strength of a non-coating surface is 1.00 or more and 1.50 or less, and when the semipermeable membrane is peeled off at an interface between the semipermeable membrane and the semipermeable membrane support, an average area of the semipermeable membrane remaining on the coating surface of the semipermeable membrane support is 500 $\mu$m$^2$ or less, and a residual ratio of the semipermeable membrane is 2.5% or more and 5.0% or less.

The "fiber orientation strength" is greatly different from fiber orientation represented by a tensile strength ratio in an MD direction and in a CD direction in that the fiber orientation (anisotropy) of only fibers present in a surface layer is emphasized rather than the entire semipermeable membrane support. In addition, as a method of checking the fiber orientation present in the surface layer of the semipermeable membrane support, there is a method of measuring an "orientation angle" of each fiber present in the surface layer with the MD direction set to 0°. The "fiber orientation strength" measures a degree of anisotropy, and is also greatly different from the "orientation angle".

Examples of a method for setting the fiber orientation strength of the coating surface, on which the semipermeable membrane is provided, of the semipermeable membrane support to 1.00 or more and 1.30 or less, and the fiber orientation strength of the non-coating surface of the semipermeable membrane support to 1.00 or more and 1.50 or less include:

(I) optimizing main synthetic fibers (fiber diameter, fiber length, and cross-sectional aspect ratio);
(II) improving fiber dispersibility by two-stage dispersion;
(III) optimizing papermaking conditions of base paper; and
(IV) adjusting hot press processing conditions (heated roll temperature and processing speed). More specifically, (III) can be controlled by performing:

(III-1) adjusting concentration (amount of papermaking water) during wet papermaking;
(III-2) adjusting papermaking speed;
(III-3) adjusting slurry flow rate and relative speed (J/W ratio) of wire;
(III-4) adjusting dehydration pressure in wire part; and
(III-5) adjusting tension balance in dryer part

alone or in combination. Among them, (II) is preferably performed.

In the present invention (1), the fiber orientation strength of the coating surface on which the semipermeable membrane is provided is 1.00 or more and 1.30 or less, more preferably 1.00 or more and 1.25 or less, still more preferably 1.00 or more and 1.20 or less. When the fiber orientation strength is 1.00 or more and 1.10 or less, it means that the fibers are in a state close to no orientation. When the fiber orientation strength of the coating surface of the semipermeable membrane support is more than 1.30, a distance between fibers on the surface of the semipermeable membrane support is reduced. Therefore, permeation through the semipermeable membrane may be inhibited, and membrane peel strength may be reduced. Further, the fiber orientation strength of the non-coating surface is 1.00 or more and 1.50 or less, more preferably 1.00 or more and 1.40 or less, and still more preferably 1.00 or more and 1.30 or less. When the fiber orientation strength of the non-coating surface of the semipermeable membrane support is more than 1.50, the permeation through the semipermeable membrane solution from the coating surface side to the non-coating surface side may be inhibited, and the membrane peel strength may be reduced.

In the present invention (1), the average area of the semipermeable membrane remaining on the coating surface of the semipermeable membrane support when the semipermeable membrane is peeled off at the interface between the semipermeable membrane and the semipermeable membrane support is 500 $\mu$m$^2$ or less, more preferably 450 $\mu$m$^2$ or less, and still more preferably 400 $\mu$m$^2$ or less. When the average area is more than 500 $\mu$m$^2$, the permeation through the semipermeable membrane into the semipermeable membrane support is non-uniform, and an anchoring effect is reduced, so that the membrane peel strength may be reduced. Further, the residual ratio of the semipermeable membrane remaining on the coating surface of the semipermeable membrane support when the semipermeable membrane is peeled off at the interface between the semipermeable membrane and the semipermeable membrane support is 2.5% or more and 5.0% or less, more preferably 2.7% or more and 5.0% or less, and still more preferably 3.0% or more and 5.0% or less. When the residual ratio is more than 5.0%, the semipermeable membrane excessively permeates the semipermeable membrane support, so that bleed-through of the semipermeable membrane may occur. When the residual ratio is less than 2.0%, a sufficient anchoring effect cannot be obtained, the membrane peel strength may be reduced, and peeling of the semipermeable membrane may occur.

<Present Invention (2)>

A semipermeable membrane support of the present invention (2) includes a wet nonwoven fabric containing main synthetic fibers and binder synthetic fibers, in which the number of loose fibers in a tape peeling test is 30 or less, and a level difference of a core portion obtained by measuring surface roughness of a coating surface on which a semipermeable membrane is provided using a confocal laser microscope is 14 μm or less.

In the present invention (2), the loose fibers are counted as single fibers unless otherwise specified. That is, a fiber bundle in which side surfaces of two or more fibers are in close contact with each other and are present in parallel in a bundle shape is counted for each fiber.

The semipermeable membrane support of the present invention (2) is a semipermeable membrane support having 30 or less loose fibers in the tape peeling test, and in particular, is a semipermeable membrane support having 30 or less loose fibers on the coating surface on which the semipermeable membrane is provided. The loose fiber is a fiber that is separated from the surface of the semipermeable membrane support caused by physical impact or rubbing due to weak adhesion between the main synthetic fiber and the binder synthetic fiber.

In the present invention (2), the number of the loose fibers is 30 or less, more preferably 20 or less, and still more preferably 10 or less. When the number of the loose fibers is more than 30, the fibers break through the surface of the semipermeable membrane at the time of forming the semipermeable membrane, membrane defects occur, and the salt rejection rate is reduced.

In the semipermeable membrane support of the present invention (2), a level difference Sk of the core portion obtained by measuring the surface roughness of the coating surface on which the semipermeable membrane is provided using a confocal laser microscope is 14 μm or less. The level difference Sk of the core portion is an index for comparing the surface roughness, and is a difference between an upper level and a lower level of the core portion in accordance with ISO 25178.

When the Sk is 14 μm or less, semipermeable membrane defects at the time of forming the semipermeable membrane are reduced, and the salt rejection rate after formation of the semipermeable membrane is less likely to be reduced. The Sk is more preferably 13 μm or less, still more preferably 12 μm or less, and particularly preferably 11.5 μm or less. When the Sk is more than 14 μm, a thickness of the semipermeable membrane provided on the semipermeable membrane support is non-uniform, and the defect occurs at a place where the semipermeable membrane is thin, leading to deterioration of membrane performance. A lower limit value of the Sk is preferably 8 μm. When the Sk is less than 8 μm, adhesiveness between the semipermeable membrane and the semipermeable membrane support may be reduced.

Examples of a method for setting the Sk of the semipermeable membrane support to 14 μm or less include the following.

The Sk can be controlled by performing:

(I) improving fiber dispersibility by two-stage dispersion;
(II) optimizing formulation design (fiber selection and binder synthetic fiber content);
(III) optimizing papermaking conditions of base paper; and
(IV) adjusting hot press processing conditions

alone or in combination. Among them, (I) is preferably performed.

<Common to Present Invention (1) and (2)>

In the present invention (1) or (2), an antimony (Sb) element elution amount in the main synthetic fiber or the binder synthetic fiber is preferably less than 5 μg/g, and more preferably less than 1 μg/g. When the Sb element elution amount in the main synthetic fiber or the binder synthetic fiber is less than 5 μg/g, the fiber dispersibility of the semipermeable membrane support during papermaking is improved. Further, in the present invention (1), it is possible to decrease the loose fibers generated from the semipermeable membrane support, and it is easy to obtain an effect of improving the membrane peel strength after formation of the semipermeable membrane. Further, in the present invention (2), it is easy to obtain an effect of increasing the salt rejection rate after formation of the semipermeable membrane. The main synthetic fiber and the binder synthetic fiber in which the Sb element elution amount is less than 5 μg/g are commercially available as fibers in which an antimony compound is not used as a polymerization catalyst or is used in a reduced amount thereof and, for example, a titanium compound, a germanium compound, or an aluminum compound is used as a polymerization catalyst. Examples of manufacturers and sellers include Teijin Frontier Co., Ltd., Toray Industries, Inc., Nan Ya Plastics Corporation, Far Eastern New Century Corporation, Ltd., Trevira Co., Ltd., Advansa Co., Ltd., and Nirmal Fibres Co., Ltd. It is also possible to obtain short fibers having a fiber length suitable for a wet nonwoven fabric, or it is also possible to obtain continuous long fibers, cut the fibers into fibers having a fiber length suitable for the wet nonwoven fabric, and use the cut fibers.

In addition, the Sb element elution amount of the semipermeable membrane support is preferably less than 1.5 μg/g, and the Sb elution amount of the semipermeable membrane support is more preferably less than 1.0 μg/g. When the Sb element elution amount of the semipermeable membrane support is less than 1.5 μg/g, the fiber dispersibility of the semipermeable membrane support during papermaking is improved. Further, in the present invention (1), it is easy to obtain the effect of increasing the membrane peel strength after formation of the semipermeable membrane. Further, in the present invention (2), it is possible to decrease the loose fibers generated from the semipermeable membrane support, and it is easy to obtain an effect of increasing the salt rejection rate after formation of the semipermeable membrane.

The "antimony element elution amount" in the present invention is calculated using <Formula 1> from a value obtained by, after immersing a fiber or a semipermeable membrane support in ultrapure water having a specific resistance of 18.2 MΩ cm and a temperature of 25°C for 24 hours, quantitatively analyzing the amount of Sb element eluted in the ultrapure water by inductively coupled plasma-mass spectrometry (ICP-MS).


<Formula 1>

Sb element elution amount (μg/g) of fiber or semipermeable membrane support = Sb element content (μg/L) of eluate × volume (L) of ultrapure water used in elution test/mass (g) of fiber or semipermeable membrane support

In the present invention, the main synthetic fiber is a fiber that forms a skeleton of the semipermeable membrane support, and is a fiber that is unlikely to be softened or melted and maintains fiber shape in a step of raising the temperature to near a softening point or a melting temperature (melting point) of the binder synthetic fiber. Examples of the main synthetic fiber include polyolefin-based, polyamide-based, polyacryl-based, vinylon-based, vinylidene-based, polyvinyl chloride-based, polyester-based, benzoate-based, polychlal-based, and phenol-based fibers, and polyester-based fibers having high heat resistance are more preferable. In addition, semisynthetic fibers such as acetate, triacetate, and promix, and regenerated fibers such as rayon, cupra, and lyocell fibers may be contained as long as performance is not impaired.

The fiber diameter of the main synthetic fiber is not particularly limited, but is preferably 30 μm or less, more preferably 2 to 20 μm, still more preferably 4 to 20 μm, and particularly preferably 6 to 20 μm. When the fiber diameter is more than 30 μm, the main synthetic fiber on the surface of the wet nonwoven fabric is likely to stand. Therefore, the fiber penetrates the semipermeable membrane to be the defect of the semipermeable membrane or the membrane performance may be reduced. When the fiber diameter is less than 2 μm, the semipermeable membrane solution is unlikely to permeate the semipermeable membrane support, and the adhesiveness between the semipermeable membrane and the semipermeable membrane support may be reduced. In the present invention (1), when the fiber diameter of the main synthetic fiber is more than 30 μm, the fiber orientation strength on the coating surface may be more than 1.30, the orientation strength of the non-coating surface may be more than 1.50;, the average area of the semipermeable membrane remaining on the coating surface of the semipermeable membrane support when the semipermeable membrane is peeled off at the interface between the semipermeable membrane and the semipermeable membrane support may be more than 500 μm$^2$, or the bleed-through of the semipermeable membrane solution may occur. Further, in the present invention (2), when the fiber diameter of the main synthetic fiber is more than 30 μm, a problem that a large amount of semipermeable membrane solution is required to obtain a desired thickness of the semipermeable membrane may occur, or the bleed-through of the semipermeable membrane solution may occur.

In the present invention, the fiber diameter is a diameter of the fiber obtained by measuring an area of a cross section of the fiber forming the semipermeable membrane support by scanning electron microscope observation of the cross section of the semipermeable membrane support and converting the area into a perfect circle. Note that the cross section of the fiber is a cross section taken perpendicularly to a length direction of the fiber.

The fiber length of the main synthetic fiber is not particularly limited, but is preferably 1 to 15 mm, more preferably 1 to 12 mm, still more preferably 3 to 10 mm, and particularly preferably 4 to 6 mm. When the fiber length is less than 1 mm, strength of the semipermeable membrane support is insufficient, and the semipermeable membrane support may be broken. When the fiber length is more than 15 mm, the fiber dispersibility tends to be reduced, and formation of the semipermeable membrane support may be non-uniform, or film formability of the semipermeable membrane may be impaired. Further, in the present invention (1), the fiber orientation strength of the coating surface may be more than 1.30, or the orientation strength of the non-coating surface may be more than 1.50.

A cross-sectional shape of the main synthetic fiber is preferably circular, and the cross-sectional aspect ratio (fiber cross-sectional major diameter/fiber cross-sectional minor diameter) of the fiber before dispersion in water in a papermaking step is preferably 1.0 or more and less than 1.2. When the cross-sectional aspect ratio is 1.2 or more, the fiber dispersibility may be reduced, or occurrence of entanglement of fibers may adversely affect uniformity of the semipermeable membrane support and smoothness of the coating surface. In the present invention (1), when the fiber orientation strength of the coating surface is more than 1.30, the orientation strength of the non-coating surface may be more than 1.50, or the average area of the semipermeable membrane remaining on the coating surface of the semipermeable membrane support when the semipermeable membrane is peeled off at the interface between the semipermeable membrane and the semipermeable membrane support may be more than 500 $\mu$m$^2$. Note that fibers having a heteromorphic cross section such as T-shaped, Y-shaped, or triangular cross section can also be contained within a range in which other properties such as the fiber dispersibility are not impaired in order to restrain the bleed-through and provide surface smoothness.

An aspect ratio (fiber length/fiber diameter) of the main synthetic fiber is preferably 200 to 1000, more preferably 220 to 900, and still more preferably 280 to 800. When the aspect ratio is less than 200, the fiber dispersibility is good. However, the fiber may fall off from a papermaking mesh during papermaking, or the fiber may stick in the papermaking mesh, leading to deterioration of peelability from the papermaking mesh. On the other hand, when the aspect ratio is more than 1000, although the aspect ratio contributes to formation of a three-dimensional network of the fibers. However, occurrence of entanglement of the fibers may adversely affect the uniformity of the semipermeable membrane support and the smoothness of the coating surface, and the loose fibers may occur. Also, the membrane defects may occur at the time of forming the semipermeable membrane. Further, in the present invention (2), the Sk may be more than 14 $\mu$m.

The content of the main synthetic fiber is preferably 40 to 90 mass%, more preferably 50 to 80 mass%, and still more preferably 60 to 75 mass% with respect to the wet nonwoven fabric related to the semipermeable membrane support of the present invention. When the content of the main synthetic fibers is less than 40 mass%, liquid permeability may be reduced. In addition, when the content is more than 90 mass%, the loose fibers may be frequently generated, and the semipermeable membrane support may be broken due to insufficient strength. Further, in the present invention (1), the average area of the semipermeable membrane remaining on the coating surface of the semipermeable membrane support when the semipermeable membrane is peeled off at the interface between the semipermeable membrane and the semipermeable membrane support may be more than 500 $\mu$m$^2$.

The semipermeable membrane support of the present invention contains the binder synthetic fiber. The binder synthetic fiber improves mechanical strength of the semipermeable membrane support by incorporating the step of raising the temperature to near the softening point or the melting temperature (melting point) of the binder synthetic fiber into a manufacturing process of the semipermeable membrane support. For example, the semipermeable membrane support can be manufactured by a wet papermaking method, and the binder synthetic fiber can be softened or melted in the subsequent drying step.

Examples of the binder synthetic fibers include core-sheath fibers (core-shell type), parallel fibers (side-by-side type), composite fibers such as radially split fibers, and undrawn fibers. Since the composite fiber is unlikely to form a membrane, the mechanical strength can be improved while maintaining a space of the semipermeable membrane support. More specific examples thereof include a combination of polypropylene (core) and polyethylene (sheath), a combination of polypropylene (core) and ethylene vinyl alcohol (sheath), a combination of high melting point polyester (core) and low melting point polyester (sheath), and the undrawn fibers such as polyester. In addition, a single fiber (fully melted type) made only of a low melting point resin such as polyethylene or polypropylene, or a hot water-soluble binder such as polyvinyl alcohol-based binder tends to form the membrane in a step of drying the semipermeable membrane support, but can be used as long as the properties are not impaired. In the present invention, the combination of high melting point polyester (core) and low melting point polyester (sheath), and the undrawn fibers of polyester can be preferably used, and the undrawn fibers of polyester can be more preferably used.

The fiber diameter of the binder synthetic fiber is not particularly limited, but is preferably 2 to 20 $\mu$m, more preferably 5 to 15 $\mu$m, and still more preferably 7 to 13 $\mu$m. In addition, the fiber diameter is preferably different from that of the main synthetic fiber. A difference in fiber diameter with the main synthetic fiber also plays a role of forming a uniform three-dimensional network together with the main synthetic fiber. Furthermore, in the step of raising the temperature to a temperature equal to or higher than the softening temperature or the melting temperature of the binder synthetic fiber, the smoothness of the surface of the semipermeable membrane support can also be improved, and it is more effective if pressurization is involved in the step.

The fiber length of the binder synthetic fiber is not particularly limited, but is preferably 1 to 12 mm, more preferably 3 to 10 mm, and still more preferably 4 to 6 mm. A cross-sectional shape of the binder synthetic fiber is preferably circular. However, the fibers having a heteromorphic cross section such as T-shaped, Y-shaped, or triangular cross section can also be contained within a range in which other properties are not impaired in order to restrain the bleed-through, provide the smoothness of the coating surface, and provide adhesiveness between non-coating surfaces.

The aspect ratio (fiber length/fiber diameter) of the binder synthetic fiber is preferably 200 to 1000, more preferably 300 to 800, and still more preferably 400 to 700. When the aspect ratio is less than 200, the fiber dispersibility is good. However, the fiber may fall off from the papermaking mesh during papermaking, or the fiber may stick in the papermaking mesh, leading to deterioration of the peelability from the papermaking mesh. On the other hand, when the aspect ratio is more than 1000, the binder synthetic fiber contributes to formation of the three-dimensional network of the fibers. However, occurrence of entanglement of the fibers may adversely affect the uniformity of the wet nonwoven fabric and the smoothness of the coating surface. Further, in the present invention (1), the loose fibers may occur, and the membrane defects may occur at the time of forming the semipermeable membrane. Further, in the present invention (2), the Sk may be more than 14 $\mu$m.

The content of the binder synthetic fiber is preferably 10 to 60 mass%, more preferably 20 to 50 mass%, and still more preferably 25 to 40 mass% with respect to the wet nonwoven fabric related to the semipermeable membrane support of the present invention. By increasing the content of the binder synthetic fiber within the above range, fluffing of the loose fibers and the main synthetic fiber can be restrained. When the content is less than 10 mass%, the semipermeable membrane support may be broken due to insufficient strength. Also, the number of binder synthetic fibers for covering the main synthetic fibers may be insufficient, leading to occurrence of the loose fibers. In addition, when the content is more than 60 mass%, there is a case where the liquid permeability may be reduced or the adhesiveness between the semipermeable membrane and the semipermeable membrane support may be reduced.

A method for manufacturing the semipermeable membrane support of the present invention will be described. The semipermeable membrane support of the present invention is a wet nonwoven fabric, and is manufactured by preparing the base paper by the wet papermaking method, and then subjecting the base paper to the hot press processing by a heated roll.

In the wet papermaking method, first, the binder synthetic fibers and the like are uniformly dispersed in water with a dispersing device such as a pulper. Then the main synthetic fibers are introduced and dispersed, so that the binder synthetic fibers are uniformly mixed with the main synthetic fibers. Thereafter, slurry that has been prepared by being diluted with white water (dilution water) to a final fiber concentration of 0.01 to 0.50 mass% through steps of screening (removal of foreign matter, lumps, and the like) and the like is made into a paper by a paper machine to obtain a wet paper. Stirring the diluted slurry with a stirrer is preferred because single fiber formation of the fiber bundle is promoted. In order to make the dispersibility of the fiber uniform, chemicals such as a dispersant, an antifoaming agent, a hydrophilic agent, an antistatic agent, a polymer viscosity agent, a release agent, an antibacterial agent, and a disinfectant may be added during the process.

In the method for manufacturing the semipermeable membrane support of the present invention (1), a method of setting the average area of the semipermeable membrane remaining on the coating surface of the semipermeable membrane support when the semipermeable membrane is peeled off at the interface between the semipermeable membrane and the semipermeable membrane support after formation of the semipermeable membrane to 500 $\mu$m$^2$ or less, and the residual ratio of the semipermeable membrane to 2.5% or more and 5.0% or less will be described. In the method for manufacturing the semipermeable membrane support of the present invention (2), a method for reducing the loose fibers will be described. In order to control the average area of the semipermeable membrane remaining on the coating surface of the semipermeable membrane support when the semipermeable membrane is peeled off at the interface between the semipermeable membrane and the semipermeable membrane support after formation of the semipermeable membrane, and to control the residual ratio of the semipermeable membrane, or in order to reduce the loose fibers, it is important to disperse the main synthetic fibers and the binder synthetic fibers in water in a fiber dispersing device (pulper) to disentangle the fiber bundle into single fibers. Examples of a method for disentangling into single fibers include addition of a dispersant, optimization of a shape of a blade in the pulper, optimization of a clearance between a pulper bottom surface and the blade, and installation of a weir plate on a wall surface of a pulper tank. Next, in the step of disentangling into single fibers, then diluting fiber dispersion liquid with white water (dilution water), and feeding the fiber dispersion liquid to the papermaking mesh, a degree of single fiber formation is increased by dispersing the diluted fiber dispersion liquid with a stirring device. In addition, addition of an aqueous solution of a water-soluble polymer having a molecular weight of 5 million or more as the polymer viscosity agent after fiber dispersion by the pulper and/or after dilution of the fiber dispersion liquid further increases the degree of single fiber formation.

Then, in the method for manufacturing the semipermeable membrane support of the present invention (1) or (2), the semipermeable membrane support is manufactured by the wet papermaking method from the fiber dispersion liquid obtained by two-stage dispersion in which the binder synthetic fibers are dispersed and then main synthetic fibers are dispersed. When the fibers are introduced into the pulper, the binder synthetic fibers are first introduced and dispersed, and then the main synthetic fibers are introduced and dispersed. Thereby, even when the single fiber formation of the main synthetic fibers is insufficient, the binder synthetic fibers sufficiently disentangled into single fibers can cover the main synthetic fibers. Therefore, in the present invention (1), the semipermeable membrane support having fine uniform pores can be manufactured. Therefore, it is easy to obtain a semipermeable membrane support in which the fiber orientation strength of the coating surface of the semipermeable membrane support is 1.00 or more and 1.30 or less, the fiber orientation strength on the non-coating surface is 1.00 or more and 1.50 or less, the average area of the semipermeable membrane remaining on the coating surface of the semipermeable membrane support when the semipermeable membrane is peeled off at the interface between the semipermeable membrane and the semipermeable membrane support after formation of the semipermeable membrane is 500 $\mu$m$^2$ or less, and the residual ratio of the semipermeable membrane is 2.5% or more and 5.0% or less. Further, in the present invention (2), the loose fibers from the semipermeable membrane support can be suppressed.

In addition, in the wet papermaking method, in a step of supplying the fiber dispersion liquid onto the papermaking mesh and squeezing excess water to obtain the wet paper, water is gradually squeezed under the papermaking mesh while a sheet-like wet paper is formed on the papermaking mesh woven with metal threads or plastic thread. Formation of the wet paper on the papermaking mesh proceeds with deposition of the fibers on a surface of the papermaking mesh, and wet paper formation is completed with completion of water squeezing. At a start of the wet paper formation, since the fibers are deposited in a dispersed state of the fiber dispersion liquid supplied onto the papermaking mesh, a loosened state of the fibers on a surface in contact with the papermaking mesh (hereinafter, the "surface in contact with the papermaking mesh" may be referred to as a "papermaking mesh surface") is uniform. On the other hand, the fiber dispersion liquid is still present on the wet paper being formed on the papermaking mesh. The loosened state of the fibers on a surface opposite to the papermaking mesh surface (hereinafter, the "surface opposite to the papermaking mesh surface" may be referred to as a "papermaking felt surface") at the time of completing the wet paper formation can be adjusted by a position of water squeezing by suction, strength of the suction, papermaking mesh speed, a flow rate of the fiber dispersion liquid, and the like.

However, as compared with the papermaking mesh surface, the uniformity of the fibers in the loosened state is reduced on the papermaking felt surface. In addition, from the middle stage to the latter stage of the wet paper formation, when the main synthetic fibers and the binder synthetic fibers have different thicknesses and lengths, the same kind of fibers may be gathered together by the suction, and the uniformity may be further reduced. When the binder synthetic fibers are gathered together, a portion where the binder synthetic fibers are partially insufficient may be caused. Therefore, in the present invention (1), since the fiber orientation strength of the papermaking mesh surface of the wet nonwoven fabric is lower than the fiber orientation strength of the papermaking felt surface, when the papermaking mesh surface is the coating surface, the average area of the remaining semipermeable membrane is reduced, and the residual ratio of the semipermeable membrane is increased, so that the membrane peel strength between the semipermeable membrane and the semipermeable membrane support is increased. In the present invention (2), since the surface strength of the papermaking mesh surface of the wet nonwoven fabric is higher than the surface strength of the papermaking felt surface, when the papermaking mesh surface is the coating surface, the defects of the semipermeable membrane due to the loose fibers are reduced, and the salt rejection rate is increased at the time of forming the semipermeable membrane.

The base paper obtained by drying the wet paper obtained by the wet papermaking method is preferably subjected to the hot press processing (thermal calendering) by the heated roll. In a hot press processing device (thermal calendering device), the base paper is passed between nipped rolls to be subjected to hot press processing. The binder synthetic fibers are thereby melted and softened to fix the main synthetic fibers. When there is a portion where no binder synthetic fiber is present in the base paper, in the present invention (1), a large hole is formed in the semipermeable membrane support, and the average area of the semipermeable membrane remaining on the coating surface of the semipermeable membrane support when the semipermeable membrane is peeled off at the interface between the semipermeable membrane and the semipermeable membrane support after the semipermeable membrane is formed is increased. It is difficult to obtain the anchoring effect for increasing the membrane peel strength. Further, in the present invention (2), the semipermeable membrane is broken through by the loose fibers, and the membrane defects occur. Therefore, single fiber formation of binder synthetic fibers in the base paper by the wet papermaking method and the dispersibility of the binder synthetic fibers and the main synthetic fibers are important.

By taking the above measures, in the present invention (1), the fiber orientation strength of the coating surface and the non-coating surface of the semipermeable membrane support, and the residual area and the residual ratio of the semipermeable membrane after the semipermeable membrane is peeled off can be controlled. Further, in the present invention (2), the loose fibers can be suppressed.

As the papermaking method, for example, a papermaking method such as a Fourdrinier method, a circular mesh method, or an inclined wire method can be used. It is possible to use a paper machine having one papermaking method selected from the group of these papermaking methods, and a combination paper machine in which two or more papermaking methods of the same type or different types selected from the group of these papermaking methods are installed online. Further, in the case of producing a wet nonwoven fabric having a multilayer structure of two or more layers, it is possible to use a "paper stacking method" in which wet papers made by respective paper machines are stacked together, a "casting method" in which one layer is formed and then a slurry in which the fibers are dispersed is cast on the layer to form another layer, or the like.

In the present invention (1), it is preferable that a difference between the flow rate and a wire speed when the slurry lands from a head box to a papermaking wire is adjusted to be small in any paper machine in order to suffice the following: the fiber orientation strength of the coating surface of the semipermeable membrane support is 1.00 or more and 1.30 or less; the fiber orientation strength of the non-coating surface is 1.00 or more and 1.50 or less; and the average area of the semipermeable membrane remaining on the coating surface of the semipermeable membrane support is 500 $\mu$m$^2$ or less and the residual ratio of the semipermeable membrane is 2.5% or more and 5.0% or less when the semipermeable membrane is peeled off at the interface between the semipermeable membrane and the semipermeable membrane support. Furthermore, it is important to immobilize the fibers by drawing water to perform dehydration as soon as the slurry comes into contact with the papermaking wire. Therefore, the control can be performed by adjusting the concentration (amount of papermaking water) during wet papermaking, the papermaking speed, the slurry flow rate and the relative speed (J/W ratio) of the papermaking wire, the dehydration pressure in the wire part, and the tension balance in the dryer part alone or in combination.

The wet paper produced by the paper machine is dried with a Yankee dryer, an air dryer, a cylinder dryer, a suction drum dryer, an infrared dryer, or the like to obtain base paper. At the time of drying the wet paper, the wet paper is brought into close contact with the heated roll such as a Yankee dryer and subjected to hot press drying, so that the smoothness of the close contact surface is improved. The hot press drying means that the wet paper is pressed against the heated roll with a touch roll or the like and dried. A surface temperature of the heated roll is preferably 100°C to 180°C, more preferably 100°C to 160°C, and still more preferably 110°C to 160°C. A pressing pressure is preferably 50 to 1000 N/cm, and more preferably 100 to 800 N/cm.

Since the Sk of the semipermeable membrane support is affected by the surface smoothness of the wet paper and the hot press drying by the heated roll, it is necessary to adjust the pressing pressure of the wet paper against the heated roll during hot press drying. Even when the surface of the wet paper is rough or uneven, the Sk of the semipermeable membrane support can be adjusted by adjusting the surface temperature of the heated roll and the pressing pressure of the wet paper against the heated roll. In the present invention (2), in order to set the Sk of the semipermeable membrane support to 14 $\mu$m or less, the pressing pressure of the wet paper against the heated roll during hot press drying is set to be high, and 300 to 800 N/cm is more preferable. In addition, in order to set the Sk of the semipermeable membrane support to 14 $\mu$m or less, it is also effective that a surface having improved smoothness by being brought into close contact with the heated roll such as the Yankee dryer at the time of hot press drying of the wet paper is used as the coating surface of the semipermeable membrane support.

Next, the hot press processing by the heated roll will be described, but the present invention is not limited to the following description. In the hot press processing device (thermal calendering device), the base paper is passed between the nipped rolls to be subjected to hot press processing. Examples of combination of rolls include two metal rolls, a metal roll and a resin roll, and a metal roll and a cotton roll. At least one of the two rolls is heated and used as the heated roll. Mainly the metal roll is used as the heated roll. The hot press processing by the heated roll can be performed twice or more. In this case, two or more sets of the above roll combinations arranged in series may be used, or the processing may be performed twice using one set of roll combination. The front and back sides of the base paper may be reversed as necessary. By controlling the surface temperature of the heated roll, a nip pressure between the rolls, and the processing speed of the base paper, a desired semipermeable membrane support is obtained.

In addition, even when the fluffing of the main synthetic fibers occurs in the base paper, the binder synthetic fibers are optimally melted and softened to hold the fluffing at the time of hot press processing by the heated roll. It is thereby possible to restrain generation of the loose fibers and the defects after membrane application. For this purpose, it is important to raise the heated roll temperature to near the melting point of the binder synthetic fiber and to increase the nip pressure. In addition, by controlling the processing speed, holding of the fluffing of the binder synthetic fibers can be adjusted to some extent. In addition, by increasing the content of the binder synthetic fiber, a degree of hold of the fluffy binder synthetic fiber can be increased.

In the present invention (2), in order to set the Sk of the semipermeable membrane support to 14 $\mu$m or less, it is required to optimize conditions of the hot press processing. The semipermeable membrane defects can be avoided by adjusting the conditions of the hot press processing and improving the smoothness of the coating surface. For this purpose, it is important to raise the heated roll temperature to near the melting point of the binder synthetic fiber, to give a sufficient amount of heat to the semipermeable membrane support by controlling the processing speed, and to increase the nip pressure.

The temperature of the heated roll preferably ranges from -50°C to -10°C with respect to the melting point of the binder synthetic fiber. The temperature more preferably ranges from -40°C to -15°C and still more preferably from -30°C to -15°C. When the temperature of the heated roll in the hot press processing is lower than -50°C with respect to the melting point of the binder synthetic fiber, the temperature of the binder synthetic fiber may not be sufficiently raised, adhesion failure with the main synthetic fiber may occur, and the strength of the semipermeable membrane support may be reduced, or the loose fibers may occur. Further, in the present invention (2), the base paper is unlikely to be crushed, and the Sk of the coating surface of the semipermeable membrane support may be more than 14 $\mu$m. On the other hand, when the temperature is higher than -10°C with respect to the melting point of the binder synthetic fiber, the binder synthetic fibers may be deactivated, adhesion between the binder synthetic fibers and the main synthetic fibers may be insufficient, and the loose fibers may occur, or the semipermeable membrane support may easily adhere to the heated roll, and the surface of the semipermeable membrane support may be non-uniform. Further, in the present invention (1), the fiber orientation strength of the coating surface may be more than 1.30, or the fiber orientation strength of the non-coating surface may be more than 1.50. Further, in the present invention (2), the Sk of the coating surface of the semipermeable membrane support may be more than 14 $\mu$m.

The nip pressure of the roll in the hot press processing is preferably 19 to 180 kN/m, and more preferably 45 to 140 kN/m. When the nip pressure is less than 19 kN/m, the close contact between the heated roll and the base paper may be reduced, the fluffing of the fibers may occur, and the loose fibers may occur. In the present invention (1), the average area of the semipermeable membrane remaining on the coating surface of the semipermeable membrane support when the semipermeable membrane is peeled off at the interface between the semipermeable membrane and the semipermeable membrane support may be more than 500 $\mu m^2$. Further, in the present invention (2), the Sk of the semipermeable membrane support may be more than 14 $\mu m$. On the other hand, when the nip pressure is more than 180 kN/m, the semipermeable membrane support may be densified, the permeation of the semipermeable membrane solution may be reduced, the adhesiveness between the semipermeable membrane and the semipermeable membrane support may be reduced, or the roll life may be shortened due to increase in an excessive load on the roll.

The processing speed in the hot press processing is preferably 4 to 100 m/min, and more preferably 10 to 80 m/min. When the processing speed is less than 4 m/min, productivity is poor. Also, a density of the semipermeable membrane support is increased, air permeability is reduced, the semipermeable membrane solution is unlikely to permeate, and the adhesiveness between the semipermeable membrane and the semipermeable membrane support may be reduced. On the other hand, when the processing speed is more than 100 m/min, heat transfer to the base paper is insufficient, and the fluffing of the main synthetic fibers occurs. The loose fibers may thereby occur. Further, in the present invention (1), when the fiber orientation strength of the coating surface is more than 1.30, the orientation strength of the non-coating surface may be more than 1.50, or the average area of the semipermeable membrane remaining on the coating surface of the semipermeable membrane support when the semipermeable membrane is peeled off at the interface between the semipermeable membrane and the semipermeable membrane support may be more than 500 $\mu m^2$. Further, in the present invention (2), the Sk of the semipermeable membrane support may be more than 14 $\mu m$.

A basis weight of the semipermeable membrane support is not particularly limited, but is preferably 20 to 150 $g/m^2$, and more preferably 50 to 100 $g/m^2$. When the basis weight is less than 20 $g/m^2$, sufficient tensile strength cannot be obtained, and the semipermeable membrane support may be broken. In addition, when the basis weight is more than 150 $g/m^2$, the liquid flow resistance may increase, or the thickness may increase and a predetermined amount of semipermeable membrane may not be storable in a unit or a module.

Further, the density of the semipermeable membrane support is preferably 0.5 to 1.0 $g/cm^3$, and more preferably 0.6 to 0.9 $g/cm^3$. When the density is less than 0.5 $g/cm^3$, the thickness increases, so that the area of the semipermeable membrane that can be incorporated into the unit is reduced. As a result, the life of the semipermeable membrane may be shortened. On the other hand, when the density is more than 1.0 $g/cm^3$, the semipermeable membrane solution is unlikely to permeate the semipermeable membrane support, and the adhesiveness between the semipermeable membrane and the semipermeable membrane support may be reduced, or the liquid permeability at the time of forming the semipermeable membrane may be lowered, and the life of the semipermeable membrane may be shortened.

The thickness of the semipermeable membrane support is preferably 50 to 150 $\mu m$, more preferably 60 to 130 $\mu m$, and still more preferably 70 to 120 $\mu m$. When the thickness is more than 150 $\mu m$, the area of the semipermeable membrane that can be incorporated into the unit is reduced. As a result, the life of the semipermeable membrane may be shortened. On the other hand, when the thickness is less than 50 $\mu m$, sufficient tensile strength may not be able to be obtained, or the liquid permeability may be reduced, and the life of the semipermeable membrane may be shortened.

EXAMPLES

The present invention will be described in more detail by way of examples. Hereinafter, unless otherwise specified, parts and ratios described in the examples are based on mass.

<Examples for explaining the present invention (1)>

<<Main Synthetic Fiber>>

PET fiber 1-1: drawn polyester fiber made of polyethylene terephthalate and having a fiber diameter of 7.5 $\mu m$, a fiber length of 5 mm, and an Sb element elution amount of 0.12 $\mu g/g$.

PET fiber 1-2: drawn polyester fiber made of polyethylene terephthalate and having a fiber diameter of 7.5 $\mu m$, a fiber length of 5 mm, and an Sb element elution amount of 0.01 $\mu g/g$.

PET fiber 1-3: drawn polyester fiber made of polyethylene terephthalate and having a fiber diameter of 7.5 $\mu m$, a fiber length of 6 mm, and an Sb element elution amount of 10.3 $\mu g/g$.

PET fiber 1-4: drawn polyester fiber made of polyethylene terephthalate and having a fiber diameter of 12.5 $\mu m$, a fiber length of 5 mm, and an Sb elution amount of 11.9 $\mu g/g$.

<<Binder Synthetic Fiber>>

PET fiber 1-5: undrawn polyester fiber made of polyethylene terephthalate and having a fiber diameter of 10.5 $\mu$m, a fiber length of 5 mm, and an Sb element elution amount of 0.04 $\mu$g/g.

PET fiber 1-6: undrawn polyester fiber made of polyethylene terephthalate and having a fiber diameter of 13.6 $\mu$m, a fiber length of 5 mm, and an Sb element elution amount of 0.01 $\mu$g/g.

PET fiber 1-7: undrawn polyester fiber made of polyethylene terephthalate and having a fiber diameter of 11.8 $\mu$m, a fiber length of 5 mm, and an Sb element elution amount of 2.3 $\mu$g/g.

(Production of base papers 1-1 to 1-19, 1-21, and 1-22: with two-stage dispersion)

After water was charged into a dispersion tank of 2 m$^3$, binder synthetic fibers were first charged into a dispersion tank with the fiber formulation shown in Table 1 and dispersed for 3 minutes. Then main synthetic fibers were charged into the dispersion tank and mixed and dispersed (dispersion concentration: 2.0%) for 7 minutes. Using an inclined wire/circular mesh composite paper machine, a wet paper formed on an inclined wire and a wet paper formed on a circular mesh wire were stacked together, and then subjected to hot press drying in a Yankee dryer at a surface temperature of 130°C to obtain base papers 1-1 to 1-19, 1-21, and 1-22 having a target basis weight of 70 g/m$^2$. Note that the fiber formulation of the inclined wire and that of the circular mesh were identical.

(Production of base paper 1-20: without two-stage dispersion)

After water was charged into a dispersion tank of 2 m$^3$, binder synthetic fibers and main synthetic fibers were simultaneously charged into a dispersion tank with the fiber formulation shown in Table 1, mixed and dispersed (dispersion concentration: 2.0%) for 7 minutes. Using an inclined wire/circular mesh composite paper machine, a wet paper formed on an inclined wire and a wet paper formed on a circular mesh wire were stacked together, and then subjected to hot press drying in a Yankee dryer at a surface temperature of 130°C to obtain a base paper 1-20 having a target basis weight of 70 g/m$^2$. Note that the fiber formulation of the inclined wire and that of the circular mesh were identical.

[Table 1]

| | | Fiber formulation [mass%] | | | | | | | Papermaking conditions | | | |
|---|---|---|---|---|---|---|---|---|---|---|---|---|
| | | Main fiber | | | | Binder fiber | | | | Papermaking speed | Papermaking water amount | J/W |
| | | PET fiber 1-1 | PET fiber 1-2 | PET fiber 1-3 | PET fiber 1-4 | PET fiber 1-5 | PET fiber 1-6 | PET fiber 1-7 | Two stage dispersion | (m/min) | (m³/min) | (-) |
| Sb elution amount [μg/g] | | 0.12 | 0.01 | 10.3 | 11.9 | 0.04 | 0.01 | 2.3 | | | | |
| Base paper | 1-1 | 65 | | | | 35 | | | with | 40 | 7.5 | 1.5 |
| | 1-2 | 65 | | | | 35 | | | with | 40 | 6.0 | 1.2 |
| | 1-3 | 65 | | | | 35 | | | with | 40 | 5.0 | 1.0 |
| | 1-4 | 65 | | | | 35 | | | with | 70 | 7.5 | 1.5 |
| | 1-5 | 65 | | | | 35 | | | with | 80 | 7.5 | 1.5 |
| | 1-6 | 70 | | | | 30 | | | with | 40 | 7.5 | 1.5 |
| | 1-7 | 70 | | | | 30 | | | with | 40 | 5.0 | 1.0 |
| | 1-8 | 70 | | | | 30 | | | with | 80 | 7.5 | 1.5 |
| | 1-9 | 75 | | | | 25 | | | with | 40 | 7.5 | 1.5 |
| | 1-10 | | 65 | | | 35 | | | with | 40 | 7.5 | 1.5 |
| | 1-11 | | 70 | | | 30 | | | with | 40 | 7.5 | 1.5 |
| | 1-12 | | 70 | | | | 30 | | with | 40 | 7.5 | 1.5 |
| | 1-13 | 65 | | | | | 35 | | with | 40 | 7.5 | 1.5 |
| | 1-14 | 70 | | | | | 30 | | with | 40 | 7.5 | 1.5 |
| | 1-15 | | 65 | | | | | 35 | with | 40 | 7.5 | 1.5 |
| | 1-16 | | | 65 | | | | 35 | with | 40 | 7.5 | 1.5 |
| | 1-17 | 65 | | | | 35 | | | with | 80 | 5.0 | 1.0 |
| | 1-18 | 70 | | | | 30 | | | with | 80 | 5.0 | 1.0 |
| | 1-19 | | 65 | | | 35 | | | with | 80 | 5.0 | 1.0 |
| | 1-20 | 65 | | | | 35 | | | without | 40 | 7.5 | 1.5 |
| | 1-21 | | | 75 | | | | 25 | with | 40 | 7.5 | 1.5 |
| | 1-22 | | | 30 | 40 | | | 30 | with | 40 | 7.5 | 1.5 |

(Thermal calendering)

Semipermeable membrane supports of Example 1-1 to 1-20 and Comparative Examples 1-1 to 1-8 were obtained from the obtained base paper inder the thermal calendering conditions described in Table 2 using a thermal calendering device of a combination of a metal roll (heated roll) and an elastic roll or a thermal calendering device of a combination of a metal roll (heated roll) and a metal roll (heated roll). Note that in the first stage in which the hot press processing was performed first, a surface (processing surface) of the base paper to be in contact with the metal roll (heated roll) was used as a coating surface, and a processing surface in the second stage in which the hot press processing was performed the second time was used as a surface opposite to the surface in the first stage. In addition, in the semipermeable membrane support subjected to the thermal calendering by the combination of the metal roll (heated roll) and the metal roll (heated roll), a circular mesh surface was used as the coating surface.

[Table 2]

| | | | Hot press processing (first stage) | | | | | Hot press processing (second stage) | | | | |
|---|---|---|---|---|---|---|---|---|---|---|---|---|
| | | | Combination of rolls | Surface temperature of heated roll (°C) | Nip pressure (kN/m) | Processing speed (m/min) | Processing surface | Combination of rolls | Surface temperature of heated roll (°C) | Nip pressure (kN/m) | Processing speed (m/min) | Processing surface |
| | 1-1 | Base paper 1-1 | metal/elastic | 235 | 100 | 40 | circular mesh surface | metal/elastic | 240 | 100 | 40 | inclined surface |
| | 1-2 | Base paper 1-1 | metal/elastic | 230 | 100 | 40 | circular mesh surface | metal/elastic | 240 | 100 | 40 | inclined surface |
| | 1-3 | Base paper 1-1 | metal/elastic | 235 | 100 | 40 | inclined surface | metal/elastic | 240 | 100 | 40 | circular mesh surface |
| | 1-4 | Base paper 1-1 | metal/elastic | 230 | 100 | 40 | inclined surface | metal/elastic | 240 | 100 | 40 | circular mesh surface |
| | 1-5 | Base paper 1-2 | metal/elastic | 235 | 100 | 40 | circular mesh surface | metal/elastic | 240 | 100 | 40 | inclined surface |
| | 1-6 | Base paper 1-3 | metal/elastic | 235 | 100 | 40 | circular mesh surface | metal/elastic | 240 | 100 | 40 | inclined surface |
| | 1-7 | Base paper 1-4 | metal/elastic | 235 | 100 | 40 | circular mesh surface | metal/elastic | 240 | 100 | 40 | inclined surface |
| | 1-8 | Base paper 1-5 | metal/elastic | 235 | 100 | 40 | circular mesh surface | metal/elastic | 240 | 100 | 40 | inclined surface |
| | 1-9 | Base paper 1-6 | metal/elastic | 235 | 100 | 40 | circular mesh surface | metal/elastic | 240 | 100 | 40 | inclined surface |

| | | | Hot press processing (first stage) | | | | | Hot press processing (second stage) | | | | |
|---|---|---|---|---|---|---|---|---|---|---|---|---|
| | | | Combination of rolls | Surface temperature of heated roll (°C) | Nip pressure (kN/m) | Processing speed (m/min) | Processing surface | Combination of rolls | Surface temperature of heated roll (°C) | Nip pressure (kN/m) | Processing speed (m/min) | Processing surface |
| Example | 1-10 | Base paper 1-6 | metal/elastic | 235 | 100 | 40 | inclined surface | metal/elastic | 240 | 100 | 40 | circular mesh surface |
| | 1-11 | Base paper 1-7 | metal/elastic | 235 | 100 | 40 | circular mesh surface | metal/elastic | 240 | 100 | 40 | inclined surface |
| | 1-12 | Base paper 1-8 | metal/elastic | 235 | 100 | 40 | circular mesh surface | metal/elastic | 240 | 100 | 40 | inclined surface |
| | 1-13 | Base paper 1-9 | metal/elastic | 235 | 100 | 40 | circular mesh surface | metal/elastic | 240 | 100 | 40 | inclined surface |
| | 1-14 | Base paper 1-10 | metal/elastic | 235 | 100 | 40 | circular mesh surface | metal/elastic | 240 | 100 | 40 | inclined surface |
| | 1-15 | Base paper 1-11 | metal/elastic | 235 | 100 | 40 | circular mesh surface | metal/elastic | 240 | 100 | 40 | inclined surface |
| | 1-16 | Base paper 1-12 | metal/elastic | 235 | 100 | 40 | circular mesh surface | metal/elastic | 240 | 100 | 40 | inclined surface |
| | 1-17 | Base paper 1-13 | metal/elastic | 235 | 100 | 40 | circular mesh surface | metal/elastic | 240 | 100 | 40 | inclined surface |
| | 1-18 | Base paper 1-14 | metal/elastic | 235 | 100 | 40 | circular mesh surface | metal/elastic | 240 | 100 | 40 | inclined surface |

(continued)

| | | Hot press processing (first stage) | | | | | Hot press processing (second stage) | | | | |
|---|---|---|---|---|---|---|---|---|---|---|---|
| | | Combination of rolls | Surface temperature of heated roll (°C) | Nip pressure (kN/m) | Processing speed (m/min) | Processing surface | Combination of rolls | Surface temperature of heated roll (°C) | Nip pressure (kN/m) | Processing speed (m/min) | Processing surface |
| 1-19 | Base paper 1-15 | metal/elastic | 235 | 100 | 40 | circular mesh surface | metal/elastic | 240 | 100 | 40 | inclined surface |
| 1-20 | Base paper 1-16 | metal/elastic | 235 | 100 | 40 | circular mesh surface | metal/elastic | 240 | 100 | 40 | inclined surface |

(continued)

| | | | Hot press processing (first stage) | | | | | Hot press processing (second stage) | | | | |
|---|---|---|---|---|---|---|---|---|---|---|---|---|
| | | | Combination of rolls | Surface temperature of heated roll (°C) | Nip pressure (kN/m) | Processing speed (m/min) | Processing surface | Combination of rolls | Surface temperature of heated roll (°C) | Nip pressure (kN/m) | Processing speed (m/min) | Processing surface |
| Comparative Example | 1-1 | Base paper 1-17 | metal/elastic | 235 | 100 | 40 | circular mesh surface | metal/elastic | 240 | 100 | 40 | inclined surface |
| | 1-2 | Base paper 1-17 | metal/elastic | 235 | 100 | 40 | inclined surface | metal/elastic | 240 | 100 | 40 | circular mesh surface |
| | 1-3 | Base paper 1-1 | metal/elastic | 230 | 100 | 40 | circular mesh surface | metal/elastic | 230 | 100 | 40 | inclined surface |
| | 1-4 | Base paper 1-18 | metal/elastic | 235 | 100 | 40 | circular mesh surface | metal/elastic | 240 | 100 | 40 | inclined surface |
| | 1-5 | Base paper 1-19 | metal/elastic | 235 | 100 | 40 | circular mesh surface | metal/elastic | 240 | 100 | 40 | inclined surface |
| | 1-6 | Base paper 1-20 | metal/elastic | 235 | 100 | 40 | circular mesh surface | metal/elastic | 240 | 100 | 40 | inclined surface |
| | 1-7 | Base paper 1-21 | metal/elastic | 235 | 100 | 40 | circular mesh surface | metal/elastic | 240 | 100 | 40 | inclined surface |
| | 1-8 | Base paper 1-22 | metal/metal | 220/220 | 100 | 40 | circular mesh/ inclined | - | - | - | - | - |

EP 4 316 633 A1

18

The semipermeable membrane supports obtained in Examples 1-1 to 1-20 and Comparative Examples 1-1 to 1-8 were subjected to the following measurement and evaluation, and the results are shown in Table 3.

[Basis weight]

The basis weight was measured in accordance with JIS P8124:2011.

[Thickness and Density of Semipermeable Membrane Support]

The thickness was measured and the density was calculated in accordance with JIS P8118:2014.

[Fiber orientation strength]

The coating surface on which the semipermeable membrane is provided and the opposite non-coating surface of the semipermeable membrane support were imaged using a scanning electron microscope (product name: JSM-6610LV, manufactured by JEOL Ltd.) at a magnification of 50 times with secondary electrons, an acceleration voltage of 20 kV, and a spot size of 30. At the time of imaging, the MD direction (flow direction) was set up and down, and the CD direction (width direction) was set left and right. Imaging was performed at 10 measurement points per the coating surface and the non-coating surface of one semipermeable membrane support.

The program "Fiber Orientation Analysis Ver. 8.13 single (FiberOri8s03)" was used. In this program, an image of 1024 pixels×1024 pixels was extracted from an original image, binarized by moving average, and FFT-converted, and orientation angle and orientation degree were calculated in two axes mode, to measure the degree of anisotropy "Orientation intensity". Imaging was performed at 10 points per the coating surface and the non-coating surface of each semipermeable membrane support. An average value of 10 points was taken as the "fiber orientation strength".

[Formation of Separation Membrane]

Using a constant-speed applicator (product name: TQC fully automated film applicator, manufactured by COTEC Corporation) having a certain clearance, an N,N-dimethylformamide (DMF) solution of a polysulfone resin (concentration: 18%) was applied to the coating surface of the semipermeable membrane support in a thickness of 125 μm. Phase separation was performed in a coagulation bath to prepare a porous polysulfone membrane. An aqueous solution A containing 2 mass% of m-phenylenediamine and 0.15 mass% of sodium lauryl sulfate was brought into contact with the porous polysulfone membrane, and then an excess aqueous solution A was removed to form a coating layer of the aqueous solution A. Subsequently, a solution B containing 0.3 mass% of trimesoyl chloride was brought into contact with a surface of the coating layer of the aqueous solution A, and excess solution B was discharged. Thereafter, drying was performed at 120°C to form a separation functional layer, and obtain a separation membrane in which a composite semipermeable membrane made of the porous polysulfone membrane and the separation functional layer was provided on the coating surface of the semipermeable membrane support. The obtained separation membrane was used in the following average area measurement of the remaining semipermeable membrane, measurement of the residual ratio of the semipermeable membrane, defect evaluation of the semipermeable membrane, and membrane peel strength evaluation.

[Average area of remaining semipermeable membrane]

The separation membrane was air-dried, then cut into a strip shape of 25 mm × 150 mm with the MD direction as the long side, and a double-sided tape (product name: nice tack (registered trademark) NW-25, manufactured by NICHIBAN Co., Ltd.) was attached to the surface of the separation membrane to obtain a membrane peel strength measuring sample. Using a constant-speed tension type tensile tester "single column type material testing machine, model number: STB-1225S" (manufactured by A&D Company, Limited), the distance between chucks was set to 20 mm, and the semipermeable membrane was peeled off from the semipermeable membrane support at a chuck moving speed of 50 mm/min.

Using a scanning electron microscope (product name: JSM-6610LV, manufactured by JEOL Ltd.), the coating surface of the semipermeable membrane support from which the semipermeable membrane was peeled off was subjected to mapping analysis (observation size: 1285 μm×970 μm) of sulfur (S) element at a magnification of 100 times with secondary electrons, an acceleration voltage of 20 kV, and a spot size of 70. Mapping analysis was performed at five measurement points per the coating surface of one semipermeable membrane support.

A transparent sheet was superimposed on a copy of an obtained mapping image, a detection portion of the sulfur (S) element was painted black using a black pen or the like, and then the transparent sheet was copied to blank sheet of paper to clearly distinguish a detection portion of the sulfur (S) element as black and a non-detection portion as white. When the detection portion of the sulfur (S) element was in contact with a boundary of the mapping image, it was not regarded as a measurement target.

Binarization was performed using image analysis software "ImageJ", to determine an area (an individual area) of the detection portion of the sulfur (S) element at one measurement point, and calculate an average value of individual areas. Similarly, an average value of individual areas of respective detection portions of the sulfur (S) element at respective measurement points was calculated, and an average value at five measurement points was taken as the "average area of the remaining semipermeable membrane".

[Residual ratio of semipermeable membrane]

Using a scanning electron microscope (product name: JSM-6610LV, manufactured by JEOL Ltd.), the coating surface of the semipermeable membrane support from which the semipermeable membrane was peeled off was subjected to mapping analysis (observation size: 1285 $\mu$m$\times$970 $\mu$m) of sulfur (S) element at a magnification of 100 times with secondary electrons, an acceleration voltage of 20 kV, and a spot size of 70. Mapping analysis was performed at five measurement points per the coating surface of one semipermeable membrane support.

A transparent sheet was superimposed on a copy of an obtained mapping image, a detection portion of the sulfur (S) element was painted black using a black pen or the like, and then the transparent sheet was copied to blank sheet of paper to clearly distinguish a detection portion of the sulfur (S) element as black and a non-detection portion as white. When the detection portion of the sulfur (S) element was in contact with a boundary of the mapping image, it was not regarded as a measurement target.

Binarization was performed using image analysis software "ImageJ", to determine an area (an individual area) of the detection portion of the sulfur (S) element at one measurement point. An occupancy of the sulfur element in the mapping image was calculated from a total area obtained by adding the individual areas, and a mapping image area (image area: 1,246,450 $\mu$m$^2$, observation size: 1285 $\mu$m$\times$970 $\mu$m). Similarly, the occupancy of the sulfur element in the mapping image was calculated from the total area of the respective detection portions of the sulfur (S) element and the mapping image area at the respective measurement points. The average value of the five measurement points was taken as the "residual ratio of semipermeable membrane".

[Measurement of Antimony Element Elution Amount]

1.6 g of a fiber or a semipermeable membrane support was immersed in 0.20 L of ultrapure water having a specific resistance of 18.2 MΩ cm and a temperature of 25°C for 24 hours. 30 mL of an eluate was collected, and 1 $\mu$L of nitric acid (Kishida Chemical Co., Ltd., for precision analysis, concentration: 60%) was added thereto. Then the Sb element content in the eluate was measured with an inductively coupled plasma mass spectrometer (ICP-MS) (device name: iCAP-Qc, manufactured by Thermo Fisher Scientific Inc.) and quantified by a calibration curve method. Furthermore, the Sb element elution amount was calculated by the following formula. Note that an Sb quantification lower limit value in the ICP-MS was 0.1 ppb, and the Sb content in the ultrapure water used for the measurement was not more than the quantification lower limit value.

<Formula 1>

Sb element elution amount ($\mu$g/g) of fiber or semipermeable membrane support =

Sb element content ($\mu$g/L) of eluate $\times$ volume (L) of ultrapure water used in elution test/mass (g) of fiber or semipermeable membrane support

[Evaluation of semipermeable membrane defect]

The separation membrane was cut into 14 cm $\times$ 19 cm, and set in a flat membrane tester (product name: SEPA CFII, Suez S.A.). An aqueous solution containing 200 ppm of a dye (Direct Blue 1, molecular weight: 993) was passed at 25°C at a transmembrane differential pressure of 1.5MPa between the feed side and the permeate side of the membrane. Thereafter, the dye deposited on the surface of the composite semipermeable membrane was washed away with pure water, the separation membrane was dried, and the number of dyed portions (membrane defect portions) was measured.

"0 to 1 location": very good level.

"2 to 3 locations": good level.

"4 to 6 locations": usable level.

"7 or more locations": poor membrane performance, unusable level.

[Semipermeable membrane bleed-through]

Using a constant-speed applicator (product name: Automatic Film Applicator, manufactured by Yasuda Seiki Seisakusho, Ltd.) having a certain clearance. A semipermeable membrane support was set on a mount, a DMF solution of a polysulfone resin (concentration: 18%) mixed with a black oily ink was applied to the coating surface of the semipermeable membrane support. After the application, an amount of the polysulfone resin penetrating the semipermeable membrane support and appearing on the mount was visually observed to evaluate the bleed-through of the semipermeable membrane.

"1": No bleed-through was observed. Very good level.

"2": Very slightly bleed-through in the form of small dots. Good level.

"3": Bleed-through in the form of small dots. Practically, usable level.

"4": Bleed-through much in the form of large dots. Practically, unusable level.

[Membrane peel strength]

The separation membrane was air-dried, then cut into a strip shape of 25 mm × 150 mm with the MD direction as the long side, and a double-sided tape (product name: nice tack (registered trademark) NW-25, manufactured by NICHIBAN Co., Ltd.) was attached to the surface of the separation membrane to obtain a membrane peel strength measuring sample. Using a constant-speed tension type tensile tester "single column type material testing machine, model number: STB-1225S" (manufactured by A&D Company, Limited), the distance between chucks was set to 20 mm, and a T-type peeling test was performed at the chuck moving speed set to 50 mm/min. An average of peel strengths at a moving amount of 20 mm to 80 mm from the start of the test was calculated to obtain the peel strength. For each sample, the average value of the obtained 10 peel strengths is shown in Table 3.

[Table 3]

| | | Physical properties | | | | | | | | Evaluation | | |
|---|---|---|---|---|---|---|---|---|---|---|---|---|
| | | Basis weight (g/m²) | Thickness (μm) | Density (g/cm³) | Coating surface Fiber orientation strength (-) | Non-coating surface Fiber orientation strength (-) | Average area of remaining semipermeable membrane (μm²) | Residual ratio of semipermeable membrane (%) | Sb element elution amount (μg/g) | Semipermeable membrane defects (locations) | Semipermeable membrane bleed-through (-) | Membrane peel strength (N/25mm) |
| Example | 1-1 | 72 | 95 | 0.76 | 1.08 | 1.19 | 321 | 3.1 | < 0.01 | 1 | 1 | 1.33 |
| | 1-2 | 71 | 92 | 0.77 | 1.13 | 1.24 | 371 | 3.7 | < 0.01 | 2 | 1 | 1.28 |
| | 1-3 | 72 | 93 | 0.77 | 1.20 | 1.13 | 403 | 2.7 | < 0.01 | 2 | 1 | 1.45 |
| | 1-4 | 73 | 91 | 0.80 | 1.23 | 1.16 | 439 | 3.0 | < 0.01 | 3 | 2 | 1.37 |
| | 1-5 | 71 | 96 | 0.74 | 1.20 | 1.40 | 453 | 2.8 | < 0.01 | 4 | 2 | 1.17 |
| | 1-6 | 74 | 93 | 0.80 | 1.29 | 1.49 | 489 | 2.5 | < 0.01 | 5 | 3 | 1.03 |
| | 1-7 | 72 | 95 | 0.76 | 1.28 | 1.45 | 433 | 2.7 | < 0.01 | 4 | 2 | 1.13 |
| | 1-8 | 73 | 95 | 0.77 | 1.30 | 1.50 | 493 | 2.5 | < 0.01 | 6 | 3 | 1.01 |
| | 1-9 | 73 | 94 | 0.78 | 1.15 | 1.29 | 364 | 4.0 | < 0.01 | 1 | 2 | 1.38 |
| | 1-10 | 74 | 95 | 0.78 | 1.26 | 1.18 | 412 | 3.2 | < 0.01 | 3 | 2 | 1.51 |
| | 1-11 | 76 | 95 | 0.80 | 1.25 | 1.45 | 483 | 2.6 | < 0.01 | 6 | 3 | 1.05 |
| | 1-12 | 74 | 95 | 0.78 | 1.29 | 1.50 | 495 | 2.9 | < 0.01 | 6 | 3 | 1.00 |
| | 1-13 | 75 | 97 | 0.77 | 1.17 | 1.31 | 380 | 4.3 | < 0.01 | 5 | 3 | 1.40 |
| | 1-14 | 75 | 98 | 0.77 | 1.14 | 1.27 | 334 | 3.5 | < 0.01 | 1 | 1 | 1.20 |
| | 1-15 | 77 | 99 | 0.78 | 1.16 | 1.34 | 357 | 3.8 | < 0.01 | 1 | 1 | 1.30 |
| | 1-16 | 75 | 98 | 0.77 | 1.20 | 1.33 | 361 | 3.6 | < 0.01 | 2 | 1 | 1.31 |
| | 1-17 | 77 | 96 | 0.80 | 1.14 | 1.29 | 349 | 3.3 | < 0.01 | 2 | 1 | 1.26 |
| | 1-18 | 76 | 98 | 0.78 | 1.20 | 1.35 | 370 | 3.6 | < 0.01 | 2 | 2 | 1.29 |
| | 1-19 | 74 | 98 | 0.76 | 1.10 | 1.37 | 384 | 3.5 | 0.59 | 1 | 1 | 1.26 |
| | 1-20 | 75 | 96 | 0.78 | 1.22 | 1.39 | 489 | 3.8 | 1.55 | 6 | 2 | 1.24 |

(continued)

| | | Physical properties | | | | | | | | Evaluation | | |
|---|---|---|---|---|---|---|---|---|---|---|---|---|
| | | Basis weight (g/m²) | Thickness (μm) | Density (g/cm³) | Coating surface Fiber orientation strength (-) | Non-coating surface Fiber orientation strength (-) | Average area of remaining semipermeable membrane (μm²) | Residual ratio of semipermeable membrane (%) | Sb element elution amount (μg/g) | Semipermeable membrane defects (locations) | Semipermeable membrane bleed-through (-) | Membrane peel strength (N/25mm) |
| Comparative Example | 1-1 | 73 | 95 | 0.77 | 1.42 | 1.55 | 558 | 2.1 | < 0.01 | 6 | 3 | 0.93 |
| | 1-2 | 71 | 94 | 0.76 | 1.52 | 1.44 | 553 | 1.9 | < 0.01 | 7 | 3 | 1.02 |
| | 1-3 | 72 | 94 | 0.77 | 1.28 | 1.43 | 483 | 5.2 | < 0.01 | 8 | 4 | 0.87 |
| | 1-4 | 74 | 95 | 0.78 | 1.48 | 1.55 | 570 | 2.7 | < 0.01 | 6 | 3 | 0.94 |
| | 1-5 | 76 | 98 | 0.78 | 1.39 | 1.51 | 521 | 2.2 | < 0.01 | 7 | 3 | 0.99 |
| | 1-6 | 72 | 93 | 0.77 | 1.37 | 1.53 | 549 | 2.0 | < 0.01 | 8 | 3 | 0.93 |
| | 1-7 | 75 | 95 | 0.79 | 1.34 | 1.42 | 568 | 1.9 | 1.87 | 7 | 3 | 0.78 |
| | 1-8 | 77 | 91 | 0.85 | 1.26 | 1.25 | 437 | 1.5 | 2.69 | 12 | 4 | 0.69 |

It has been found that the semipermeable membrane supports of Example 1-1 to 1-20 included a wet nonwoven fabric containing main synthetc fibers and binder synthetic fibers, in which a fiber orientation strength of a coating surface on which a semipermeable membrane was provided was 1.00 or more and 1.30 or less. Also, a fiber orientation strength of a non-coating surface was 1.00 or more and 1.50 or less, and when the semipermeable membrane was peeled off at an interface between the semipermeable membrane and the semipermeable membrane support, an average area of the semipermeable membrane remaining on the coating surface of the semipermeable membrane support was 500 $\mu m^2$ or less, and a residual ratio of the semipermeable membrane was 2.5% or more and 5.0% or less. Thus, the semipermeable membrane had few defects, the semipermeable membrane was unlikely to bleed through, and the membrane peel strength between the semipermeable membrane and the semipermeable membrane support was high.

From comparison of Example 1-1 and Examples 1-5 to 1-8 and comparison of Example 1-9 and Examples 1-11 to 1-12, it is found that the fiber orientation strength of the coating surface and the non-coating surface of the semipermeable membrane support can be adjusted by the papermaking conditions and the fiber formulation.

Comparison of the semipermeable membrane supports of Example 1-1 with Comparative Example 1-1, Example 1-3 with Comparative Example 1-2, Example 1-7 with Comparative Example 1-4, and Example 1-10 with Comparative Example 1-5 was made. The comparison shows that when the papermaking speed was increased and an amount of papermaking water and the J/W ratio was reduced, the fiber orientation strength of the permeable membrane coating surface was more than 1.30, the fiber orientation strength of the non-coating surface was more than 1.50, the semipermeable membrane permeation area was more than 500 $\mu m^2$, and the residual ratio of the semipermeable membrane was less than 2.0%, and thus the membrane peel strength was low.

The semipermeable membrane support of Example 1-1 in which the content of the binder synthetic fibers was 35%, the semipermeable membrane support of Example 1-9 in which the content of the binder synthetic fibers was 30%, and the semipermeable membrane support of Example 1-13 in which the content of the binder synthetic fibers was 25% were compared. It is found from the comparison that the membrane peel strength increased as the content of the binder synthetic fibers increased. On the other hand, in Comparative Example 1-7, the PET fiber 1-1 of Example 1-13 was changed to the PET fiber 1-3 having a large Sb element elution amount. It is found in Comparative Example 1-7 that the defect of the semipermeable membrane increased, the semipermeable membrane bleed-through were deteriorated, and the membrane peel strength was reduced.

In the semipermeable membrane support of Example 1-1, the fiber orientation strength of the coating surface was 1.00 or more and 1.30 or less, the fiber orientation strength of the non-coating surface was 1.00 or more and 1.50 or less, the average area of the semipermeable membrane remaining on the coating surface of the semipermeable membrane support when the semipermeable membrane was peeled off at the interface between the semipermeable membrane and the semipermeable membrane support was 500 $\mu m^2$ or less, the residual ratio of the semipermeable membrane was 2.5% or more and 5.0% or less, and the Sb element elution amount of the semipermeable membrane support was less than 1.5 $\mu g/g$. In contrast to the semipermeable membrane support of Example 1-1, in the semipermeable membrane support of Example 1-20, the fiber orientation strength of the coating surface was 1.00 or more and 1.30 or less, the fiber orientation strength of the non-coating surface was 1.00 or more and 1.50 or less, the average area of the semipermeable membrane remaining on the coating surface of the semipermeable membrane support when the semipermeable membrane was peeled off at the interface between the semipermeable membrane and the semipermeable membrane support was 500 $\mu m^2$ or less, the residual ratio of the semipermeable membrane was 2.5% or more and 5.0% or less, and the Sb element elution amount of the semipermeable membrane support was more than 1.5 $\mu g/g$. It is found that the semipermeable membrane support of Example 1-20 was at a usable level, but the semipermeable membrane defect increased and the membrane peel strength was reduced.

In contrast to the semipermeable membrane supports of Examples 1-1, 1-2, and 1-9 in which the coating surface is a circular mesh surface, in Examples 1-3, 1-4, and 1-10, the coating surface was an inclined wire surface. Comparing Example 1-1 with Example 1-3, Example 1-2 with Example 1-4, and Example 1-9 with Example 1-10, it is found that since the fiber orientation strength of the coating surface of the circular mesh surface was lower than that of the inclined wire surface, the semipermeable membrane defects were reduced.

In the semipermeable membrane support of Comparative Example 1-1, the two-stage dispersion was performed at the time of manufacturing the base paper. In contrast to the semipermeable membrane support of Comparative Example 1-1, in the semipermeable membrane support of Example 1-6, the two-stage dispersion was not performed. The comparison therebetween shows that in the semipermeable membrane support of Example 1-6, the fiber orientation strength of the semipermeable membrane coating surface was more than 1.30, the fiber orientation strength of the non-coating surface was more than 1.50, the average area of the semipermeable membrane remaining on the coating surface of the semipermeable membrane support when the semipermeable membrane was peeled off at the interface between the semipermeable membrane and the semipermeable membrane support was more than 500 $\mu m^2$, and the residual ratio of the semipermeable membrane was less than 2.5%, and thus the membrane peel strength was low.

From comparison of Examples 1-1 and 1-2 with Comparative Example 1-3, in Comparative Example 1-3 in which the temperature of the heated roll in the second stage was low, the residual ratio of the semipermeable membrane was high, the bleed-through of the semipermeable membrane occurred, and the membrane peel strength was also low.

In Comparative Example 1-8, the PET fibers 1-3 and 1-4 having a large Sb element elution amount were blended and the combination of the rolls in the first stage was changed to a metal roll and a metal roll. It is found in Comparative Example 1-8 that the residual ratio of the semipermeable membrane was lower than 2.5%, and thus the membrane peel strength was low.

<Examples for explaining the present invention (2)>

<<Main Synthetic Fiber>>

PET fiber 2-1: drawn polyester fiber made of polyethylene terephthalate and having a fiber diameter of 7.5 $\mu$m, a fiber length of 5 mm, and an Sb element elution amount of 0.01 $\mu$g/g or less.
PET fiber 2-2: drawn polyester fiber made of polyethylene terephthalate and having a fiber diameter of 7.5 $\mu$m, a fiber length of 5 mm, and an Sb element elution amount of 0.12 $\mu$g/g.
PET fiber 2-3: drawn polyester fiber made of polyethylene terephthalate and having a fiber diameter of 7.5 $\mu$m, a fiber length of 6 mm, and an Sb element elution amount of 10.3 $\mu$g/g.
PET fiber 2-4: drawn polyester fiber made of polyethylene terephthalate and having a fiber diameter of 12.5 $\mu$m, a fiber length of 5 mm, and an Sb element elution amount of 11.9 $\mu$g/g.

<<Binder Synthetic Fiber>>

PET fiber 2-5: undrawn polyester fiber made of polyethylene terephthalate and having a fiber diameter of 11.8 $\mu$m, a fiber length of 5 mm, and an Sb element elution amount of 2.3 $\mu$g/g.
PET fiber 2-6: undrawn polyester fiber made of polyethylene terephthalate and having a fiber diameter of 10.5 $\mu$m, a fiber length of 5 mm, and an Sb element elution amount of 0.04 $\mu$g/g.
PET fiber 2-7: undrawn polyester fiber made of polyethylene terephthalate and having a fiber diameter of 11.8 $\mu$m, a fiber length of 5 mm, and an Sb element elution amount of 0.01 $\mu$g/g or less.
PET fiber 2-8: undrawn polyester fiber made of polyethylene terephthalate and having a fiber diameter of 13.6 $\mu$m, a fiber length of 5 mm, and an Sb element elution amount of 0.01 $\mu$g/g or less.
PET fiber 2-9: undrawn polyester fiber made of polyethylene terephthalate and having a fiber diameter of 13.6 $\mu$m, a fiber length of 10 mm, and an Sb element elution amount of 0.01 $\mu$g/g or less.

(Production of base papers 2-1 to 2-3 and 2-5 to 2-16: with two-stage dispersion)

After water was charged into a dispersion tank of 2 m$^3$, binder synthetic fibers were first charged into a dispersion tank with the fiber formulation shown in Table 4 and dispersed for 3 minutes. Then main synthetic fibers were charged into the dispersion tank and mixed and dispersed (dispersion concentration: 2.0%) for 7 minutes. Using an inclined wire/circular mesh composite paper machine, a wet paper formed on an inclined wire and a wet paper formed on a circular mesh were stacked together, and then subjected to hot press drying in a Yankee dryer at a surface temperature of 130°C to obtain base papers 2-1 to 2-3 and 2-5 to 2-16 having a target basis weight of 70 g/m$^2$. Note that the fiber formulation of the inclined wire and that of the circular mesh were identical.

(Production of base paper 2-4: without two-stage dispersion)

After water was charged into a dispersion tank of 2 m$^3$, binder synthetic fibers and main synthetic fibers were simultaneously charged into a dispersion tank with the fiber formulation shown in Table 4, mixed and dispersed (dispersion concentration: 2.0%) for 7 minutes. Using an inclined wire/circular mesh composite paper machine, a wet paper formed on an inclined wire and a wet paper formed on a circular mesh were stacked together, and then subjected to hot press drying on a Yankee dryer at a surface temperature of 130°C to obtain a base paper 2-4 having a target basis weight of 70 g/m$^2$. Note that the fiber formulation of the inclined wire and that of the circular mesh were identical.

[Table 4]

| | | Fiber formulation [mass%] | | | | | | | | | Two stage dispersion |
|---|---|---|---|---|---|---|---|---|---|---|---|
| | | Main fiber | | | | Binder fiber | | | | | |
| | | PET fiber 2-1 | PET fiber 2-2 | PET fiber 2-3 | PET fiber 2-4 | PET fiber 2-5 | PET fiber 2-6 | PET fiber 2-7 | PET fiber 2-8 | PET fiber 2-9 | |
| Sb elution amount [μg/g] | | ≦0.01 | 0.12 | 10.3 | 11.9 | 2.3 | 0.04 | ≦0.01 | ≦0.01 | ≦0.01 | |
| Base paper | 2-1 | 70 | | | | 30 | | | | | with |
| | 2-2 | 75 | | | | 25 | | | | | with |
| | 2-3 | 60 | | | | 40 | | | | | with |
| | 2-4 | 60 | | | | 40 | | | | | without |
| | 2-5 | 70 | | | | | 30 | | | | with |
| | 2-6 | 60 | | | | | 40 | | | | with |
| | 2-7 | 50 | | | | | 50 | | | | with |
| | 2-8 | 60 | | | | | | 40 | | | with |
| | 2-9 | 60 | | | | | | | 40 | | with |
| | 2-10 | 60 | | | | | | | | 40 | with |
| | 2-11 | | 60 | | | | 40 | | | | with |
| | 2-12 | | 60 | | | | | | 40 | | with |
| | 2-13 | | 60 | | | | | | | 40 | with |
| | 2-14 | | 70 | | | 30 | | | | | with |
| | 2-15 | | | 75 | | 25 | | | | | with |
| | 2-16 | | | 30 | 40 | 30 | | | | | with |

(Thermal calendering)

Semipermeable membrane supports of Examples 2-1 to 2-16 and Comparative Examples 2-1 to 2-7 were obtained from the obtained base paper under the thermal calendering conditions described in Table 5 using a thermal calendering device of a combination of a metal roll (heated roll) and an elastic roll or a thermal calendering device of a combination of a metal roll (heated roll) and a metal roll (heated roll). Note that in the first stage in which the hot press processing was performed first, a surface (processing surface) of the base paper to be in contact with the metal roll (heated roll) was used as a coating surface, and a processing surface in the second stage in which the hot press processing was performed the second time was used as a surface opposite to the surface in the first stage. In Table 5, the circular mesh surface is a surface formed on the circular mesh, and the inclined surface is a surface formed on the inclined wire.

[Table 5]

| | | | Hot press processing (first stage) | | | | | Hot press processing (second stage) | | | | |
|---|---|---|---|---|---|---|---|---|---|---|---|---|
| | | | Combination of rolls | temperature of heated (°C) | Nip pressure (kN/m) | Processing speed (m/min) | Processing surface | Combination of rolls | temperature of heated (°C) | Nip pressure (kN/m) | Processing speed (m/min) | Processing surface |
| Example | 2-1 | Base paper 2-1 | metal/elastic | 235 | 100 | 40 | circular mesh surface | metal/elastic | 240 | 100 | 40 | inclined surface |
| | 2-2 | Base paper 2-1 | metal/elastic | 230 | 100 | 40 | circular mesh surface | metal/elastic | 240 | 100 | 40 | inclined surface |
| | 2-3 | Base paper 2-1 | metal/elastic | 230 | 100 | 40 | circular mesh surface | metal/elastic | 235 | 100 | 40 | inclined surface |
| | 2-4 | Base paper 2-1 | metal/elastic | 235 | 100 | 40 | inclined surface | metal/elastic | 240 | 100 | 40 | circular mesh surface |
| | 2-5 | Base paper 2-2 | metal/elastic | 235 | 100 | 40 | circular mesh surface | metal/elastic | 240 | 100 | 40 | inclined surface |
| | 2-6 | Base paper 2-3 | metal/elastic | 235 | 100 | 40 | circular mesh surface | metal/elastic | 240 | 100 | 40 | inclined surface |
| | 2-7 | Base paper 2-5 | metal/elastic | 235 | 100 | 40 | circular mesh surface | metal/elastic | 240 | 100 | 40 | inclined surface |
| | 2-8 | Base paper 2-6 | metal/elastic | 235 | 100 | 40 | circular mesh surface | metal/elastic | 240 | 100 | 40 | inclined surface |
| | 2-9 | Base paper 2-7 | metal/elastic | 235 | 100 | 40 | circular mesh surface | metal/elastic | 240 | 100 | 40 | inclined surface |

| | | | Hot press processing (first stage) | | | | | Hot press processing (second stage) | | | | |
|---|---|---|---|---|---|---|---|---|---|---|---|---|
| | | | Combination of rolls | temperature of heated (°C) | Nip pressure (kN/m) | Processing speed (m/min) | Processing surface | Combination of rolls | temperature of heated (°C) | Nip pressure (kN/m) | Processing speed (m/min) | Processing surface |
| | 2-10 | Base paper 2-8 | metal/elastic | 235 | 100 | 40 | circular mesh surface | metal/elastic | 240 | 100 | 40 | inclined surface |
| | 2-11 | Base paper 2-9 | metal/elastic | 235 | 100 | 40 | circular mesh surface | metal/elastic | 240 | 100 | 40 | inclined surface |
| | 2-12 | Base paper 2-10 | metal/elastic | 235 | 100 | 40 | circular mesh surface | metal/elastic | 240 | 100 | 40 | inclined surface |
| | 2-13 | Base paper 2-11 | metal/elastic | 235 | 100 | 40 | circular mesh surface | metal/elastic | 240 | 100 | 40 | inclined surface |
| | 2-14 | Base paper 2-12 | metal/elastic | 235 | 100 | 40 | circular mesh surface | metal/elastic | 240 | 100 | 40 | inclined surface |
| | 2-15 | Base paper 2-13 | metal/elastic | 235 | 100 | 40 | circular mesh surface | metal/elastic | 240 | 100 | 40 | inclined surface |
| | 2-16 | Base paper 2-14 | metal/elastic | 235 | 100 | 40 | circular mesh surface | metal/elastic | 240 | 100 | 40 | inclined surface |

| | | | Hot press processing (first stage) | | | | | Hot press processing (second stage) | | | | |
|---|---|---|---|---|---|---|---|---|---|---|---|---|
| | | | Combination of rolls | temperature of heated (°C) | Nip pressure (kN/m) | Processing speed (m/min) | Processing surface | Combination of rolls | temperature of heated (°C) | Nip pressure (kN/m) | Processing speed (m/min) | Processing surface |
| Comparative Example | 2-1 | Base paper 2-1 | metal/elastic | 230 | 100 | 40 | circular mesh surface | metal/elastic | 230 | 100 | 40 | inclined surface |
| | 2-2 | Base paper 2-1 | metal/elastic | 225 | 100 | 40 | circular mesh surface | metal/elastic | 230 | 100 | 40 | inclined surface |
| | 2-3 | Base paper 2-4 | metal/elastic | 235 | 100 | 40 | circular mesh surface | metal/elastic | 240 | 100 | 40 | inclined surface |
| | 2-4 | Base paper 2-5 | metal/elastic | 230 | 100 | 40 | circular mesh surface | metal/elastic | 230 | 100 | 40 | inclined surface |
| | 2-5 | Base paper 2-5 | metal/elastic | 225 | 100 | 40 | circular mesh surface | metal/elastic | 230 | 100 | 40 | inclined surface |
| | 2-6 | Base paper 2-15 | metal/elastic | 235 | 100 | 40 | circular mesh surface | metal/elastic | 240 | 100 | 40 | inclined surface |
| | 2-7 | Base paper 2-16 | metal/metal | 220/220 | 100 | 40 | - | - | - | - | - | — |

EP 4 316 633 A1

The semipermeable membrane supports obtained in Examples 2-1 to 2-16 and Comparative Examples 2-1 to 2-7 were subjected to the following measurement and evaluation, and the results are shown in Table 6.

[Basis weight]

The basis weight was measured in accordance with JIS P8124:2011.

[Thickness and Density of Semipermeable Membrane Support]

The thickness was measured in accordance with JIS P8118:2014.

[Tape Peeling Test: Number of Loose Fibers]

The semipermeable membrane support was cut into a width of 45 mm and a length of 60 mm to prepare a sample. A cellophane adhesive tape (manufactured by Nichiban Co., Ltd., product name: Lpack (registered trademark) LP24) cut into a width of 24 mm and a length of 100 mm was attached to the coating surface of the cut semipermeable membrane support on a rubber mat such that both ends of the tape protruded in the length direction at the central portion of the sample. A metal roll (diameter 4 cm, length 30 cm, weight 3 kg) having a smooth surface was rolled three times on the sample to which the tape was attached, so that the tape was uniformly attached to the sample. A portion of the attached tape protruding from the sample was held, the tape was slowly peeled off from the sample, and fibers attached to the tape were observed. Five samples were prepared, and five tests were performed. The number of the loose fibers present in the central portion (20 mm × 50 mm) of the tape peeled off from the sample was measured, and the average number of 5 tests was calculated.

[Measurement of Level Difference Sk of Core Portion]

The semipermeable membrane support was cut into a width of 45 mm and a length of 60 mm to prepare a sample. Using a confocal laser microscope (product name: VK-X1050, manufactured by Keyence Corporation), imaging was performed at an observation magnification of 20 times and an imaging size of 3 mm in length and 2 mm in width. The entire region was specified as a measurement region, and the Sk was measured.

[Measurement of Antimony Element Elution Amount]

30 mL of an eluate obtained by immersing 1.6 g of a main synthetic fiber, a binder synthetic fiber, or a semipermeable membrane support in 0.20 L of ultrapure water having a specific resistance of 18.2 MΩ cm and a temperature of 25°C for 24 hours was collected. 1 μL of nitric acid (Kishida Chemical Co., Ltd., for precision analysis, concentration: 60%) was added thereto. Then the Sb element content in the eluate was measured with an inductively coupled plasma mass spectrometer (ICP-MS) (device name: iCAP-Qc, manufactured by Thermo Fisher Scientific Inc.) and quantified by a calibration curve method. Furthermore, the Sb element elution amount was calculated by <Formula 1>. Note that an Sb quantification lower limit value in the ICP-MS was 0.1 ppb, and the Sb content in the ultrapure water used for the measurement was not more than the quantification lower limit value.

<Formula 1>

Sb element elution amount (μg/g) of fiber or semipermeable membrane support =

Sb element content (μg/L) of eluate × volume (L) of ultrapure water used in elution test/mass (g) of fiber or semipermeable membrane support

[Measurement of Salt Rejection Rate]

Using a constant-speed applicator (product name: TQC fully automated film applicator, manufactured by COTEC Corporation) having a certain clearance, a DMF solution of a polysulfone resin (concentration: 18%) was applied to the coating surface of the semipermeable membrane support in a thickness of 125 μm. Phase separation was performed in a coagulation bath to prepare a porous polysulfone membrane. An aqueous solution A containing 2 mass% of m-phenylenediamine and 0.15 mass% of sodium lauryl sulfate was brought into contact with the porous polysulfone membrane, and then an excess aqueous solution A was removed to form a coating layer of the aqueous solution A. Subsequently, a solution B containing 0.3 mass% of trimesoyl chloride was brought into contact with a surface of the coating layer of the aqueous solution A, and excess solution B was discharged. Thereafter, drying was performed at 120°C to form a separation functional layer, and obtain a separation membrane in which a composite semipermeable membrane made of the porous polysulfone membrane and the separation functional layer was provided on the coating surface of the semipermeable membrane support.

The separation membrane was cut into 14 cm × 19 cm, and set in a flat membrane tester (product name: SEPA CFII, Suez S.A.). A 3.0 mass% sodium chloride aqueous solution at 25°C was passed at a transmembrane differential pressure of 5.0MPa between the feed side and the permeate side. Conductivity of the permeated water obtained by this operation was measured, and the salt rejection rate (%) was calculated. A calibration curve was prepared from the sodium chloride concentration and the aqueous solution conductivity, and the salt rejection rate was calculated from <Formula 2> using the calibration curve.

<Formula 2>

$$\text{Salt rejection rate (\%)} = (1 - (\text{sodium chloride concentration of permeated solution})/(\text{sodium chloride concentration of feed solution})) \times 100$$

[Evaluation of semipermeable membrane defect]

The separation membrane was cut into 14 cm × 19 cm, and set in a flat membrane tester (product name: SEPA CFII, Suez S.A.). An aqueous solution containing 200 ppm of a dye (Direct Blue 1, molecular weight: 993) was passed at 25°C at a transmembrane differential pressure of 1.5MPa between the feed side and the permeate side of the membrane. Thereafter, the dye deposited on the surface of the composite semipermeable membrane was washed away with pure water, the separation membrane was dried, and the number of dyed portions (membrane defect portions) was measured.

0 to 1 location is at a very good level, 2 to 3 locations are at a good level, 4 to 6 locations are at a usable level, and 7 or more locations are at an unusable level with poor membrane performance.

[Semipermeable membrane bleed-through]

Using a constant-speed applicator (product name: Automatic Film Applicator, manufactured by Yasuda Seiki Seisakusho, Ltd.) having a certain clearance. A semipermeable membrane support was set on a mount, a DMF solution of a polysulfone resin (concentration: 18%) mixed with a black oily ink was applied to the coating surface of the semipermeable membrane support. After the application, an amount of the polysulfone resin penetrating the semipermeable membrane support and appearing on the mount was visually observed to evaluate the bleed-through of the semipermeable membrane.

1: No bleed-through was observed. Very good level.
2: Very slightly bleed-through in the form of small dots. Good level.
3: Bleed-through in the form of small dots. Practically, usable level.
4: Bleed-through much in the form of large dots. Practically, unusable level.

[Table 6]

| | | Physical properties | | | | | | Evaluation | | |
|---|---|---|---|---|---|---|---|---|---|---|
| | | Basis weight (g/m$^2$) | Thickness ($\mu$m) | Density (g/cm$^3$) | Number of loose fibers (pieces) | Level difference Sk of core portion (-) | Sb element elution amount ($\mu$g/g) | Salt rejection rate (%) | Semipermeable membrane defects (locations) | Semipermeable membrane bleed-through (-) |
| Example | 2-1 | 74 | 98 | 0.76 | 1 | 10.9 | 0.52 | 99.1 | 1 | 1 |
| | 2-2 | 73 | 97 | 0.75 | 3 | 11.3 | 0.83 | 99.1 | 1 | 1 |
| | 2-3 | 74 | 92 | 0.80 | 7 | 11.8 | 0.70 | 98.7 | 2 | 2 |
| | 2-4 | 75 | 96 | 0.78 | 7 | 11.9 | 0.58 | 98.5 | 6 | 2 |
| | 2-5 | 75 | 98 | 0.77 | 10 | 12.1 | 0.34 | 98.6 | 4 | 2 |
| | 2-6 | 74 | 91 | 0.81 | 4 | 11.1 | 1.17 | 98.4 | 1 | 1 |
| | 2-7 | 75 | 97 | 0.77 | 18 | 13.3 | < 0.01 | 98.8 | 2 | 2 |
| | 2-8 | 74 | 93 | 0.80 | 11 | 11.7 | < 0.01 | 99.1 | 1 | 1 |
| | 2-9 | 74 | 91 | 0.81 | 2 | 11.2 | < 0.01 | 99.0 | 1 | 1 |
| | 2-10 | 75 | 93 | 0.81 | 3 | 11.8 | < 0.01 | 99.0 | 1 | 1 |
| | 2-11 | 74 | 91 | 0.81 | 4 | 11.9 | < 0.01 | 98.9 | 1 | 1 |
| | 2-12 | 75 | 91 | 0.82 | 6 | 12.0 | < 0.01 | 98.6 | 2 | 2 |
| | 2-13 | 75 | 94 | 0.80 | 5 | 11.2 | < 0.01 | 99.1 | 1 | 1 |
| | 2-14 | 76 | 93 | 0.82 | 7 | 11.8 | < 0.01 | 98.8 | 1 | 1 |
| | 2-15 | 75 | 93 | 0.81 | 5 | 12.1 | < 0.01 | 98.5 | 2 | 2 |
| | 2-16 | 75 | 96 | 0.78 | 28 | 12.7 | 1.63 | 97.9 | 5 | 2 |

(continued)

| | | Physical properties | | | | | | Evaluation | | |
|---|---|---|---|---|---|---|---|---|---|---|
| | | Basis weight (g/m$^2$) | Thickness ($\mu$m) | Density (g/cm$^3$) | Number of loose fibers (pieces) | Level difference Sk of core portion (-) | Sb element elution amount ($\mu$g/g) | Salt rejection rate (%) | Semipermeable membrane defects (locations) | Semipermeable membrane bleed-through (-) |
| Comparative Example | 2-1 | 75 | 98 | 0.77 | 32 | 12.7 | 0.51 | 97.8 | 4 | 3 |
| | 2-2 | 74 | 96 | 0.77 | 48 | 14.1 | 0.69 | 97.3 | 7 | 4 |
| | 2-3 | 73 | 94 | 0.78 | 15 | 14.1 | 0.97 | 97.0 | 9 | 2 |
| | 2-4 | 75 | 98 | 0.77 | 41 | 13.7 | < 0.01 | 97.2 | 5 | 3 |
| | 2-5 | 75 | 96 | 0.78 | 59 | 14.2 | < 0.01 | 96.8 | 8 | 4 |
| | 2-6 | 75 | 95 | 0.79 | 57 | 12.1 | 1.87 | 95.4 | 4 | 2 |
| | 2-7 | 77 | 91 | 0.85 | 62 | 14.5 | 2.69 | 95.8 | 6 | 4 |

The semipermeable membrane supports of Examples 2-1 to 2-16 included a wet nonwoven fabric containing main synthetic fibers and binden synthetic fibers. It is found in the semipermeable membrane supports of Examples 2-1 to 2-16 that the number of loose fibers in a tape peeling test was 30 or less, and a level difference of a core portion obtained by measuring surface roughness of a coating surface on which a semipermeable membrane was provided using a confocal laser microscope was 14 μm or less. Thus, the salt rejection rate was high, the semipermeable membrane had few defects, and the semipermeable membrane was unlikely to bleed through.

Comparison of Examples 2-1 to 2-3 with Comparative Examples 2-1 and 2-2 and comparison of Example 2-7 with Comparative Examples 2-4 and 2-5 were made. The comparisons show that in the semipermeable membrane supports of Comparative Examples 2-1 and 2-2 and Comparative Examples 2-4 and 2-5 in which the temperature of the heated roll in the first stage or the heated roll in the second stage was low, the number of the loose fibers was more than 30, and the salt rejection rate was low.

The semipermeable membrane support of Example 2-1 in which the content of the binder synthetic fibers was 30% was compared with the semipermeable membrane support of Example 2-5 in which the content of the binder synthetic fibers was 25%. The comparison shows that in the semipermeable membrane support of Example 2-5, the salt rejection rate was lower, there were more defects of the semipermeable membrane. However, the semipermeable membrane support of Example 2-5 was at a usable level. On the other hand, in Comparative Example 2-6 in which the PET fiber 2-1 of Example 2-5 was changed to the PET fiber 2-3 having a large Sb element elution amount, it is found that there were many loose fibers and the salt rejection rate was low.

In Comparative Example 2-7, the PET fiber 2-3 having a large Sb element elution amount and the PET fiber 2-4 having a large Sb element elution amount and a large fiber diameter were blended, and the combination of the rolls in the first stage was changed to a metal roll and a metal roll. It is found in Comparative Example 2-7 that there were many loose fibers, and the level difference Sk of the core portion was more than 14 μm, and thus the salt rejection rate was low.

In the semipermeable membrane supports of Examples 2-1 to 2-15 and Comparative Examples 2-1, 2-2, 2-4, and 2-5, the Sb element elution amount of the semipermeable membrane support was 1.5 μg/g or less. In Comparative Examples 2-1, 2 -2, 2-4, and 2-5 in which the temperature of the heated roll in the first stage or the second stage was low, it is found that the number of the loose fibers was more than 30 and the level difference Sk of the core portion was high, and thus the salt rejection rate was low.

In contrast to the semipermeable membrane support of Example 2-1 in which the coating surface was a circular mesh surface, the semipermeable membrane support of Example 2-4 in which the coating surface was an inclined wire surface was at a usable level. However, it is found that the defects of the semipermeable membrane increased and the salt rejection rate was reduced.

In contrast to the semipermeable membrane support of Example 2-6 in which the two-stage dispersion was performed at the time of manufacturing the base paper, in the semipermeable membrane support of Comparative Example 2-3, the two-stage dispersion was not performed. The semipermeable membrane support of Comparative Example 2-3 had a level difference Sk of the core portion of more than 14 μm, and was at an unusable level in the defect evaluation of the semipermeable membrane.

In the semipermeable membranes of Examples 2-1 and 2-7, the number of the loose fibers in the tape peeling test was 30 or less, the level difference Sk of the core portion was 14 μm or less, the Sb element elution amount of the main synthetic fibers and the binder synthetic fibers was less than 5 μg/g, and the Sb element elution amount of the semipermeable membrane support was less than 1.5 μg/g. In contrast to the semipermeable membranes of Examples 2-1 and 2-7, in the semipermeable membrane support of Example 2-16, the number of the loose fibers was 30 or less, and the level difference Sk of the core portion was 14 μm or less, but the Sb element elution amount of the main synthetic fibers was more than 5 μg/g and the Sb element elution amount of the semipermeable membrane support was more than 1.5 μg/g. The semipermeable membrane support of Example 2-16 was at a usable level, but the defect of the semipermeable membrane increased, and the salt rejection rate was reduced.

INDUSTRIAL APPLICABILITY

The semipermeable membrane support of the present invention can be used in the fields of seawater desalination, water purifiers, food concentration, wastewater treatment, medical use typified by blood filtration, ultrapure water production for semiconductor cleaning, and the like.

**Claims**

1. A semipermeable membrane support comprising a wet nonwoven fabric containing main synthetic fibers and binder synthetic fibers, wherein

a fiber orientation strength of a coating surface on which a semipermeable membrane is provided is 1.00 or more and 1.30 or less, and a fiber orientation strength of a non-coating surface is 1.00 or more and 1.50 or less, and

when the semipermeable membrane is peeled off at an interface between the semipermeable membrane and the semipermeable membrane support, an average area of the semipermeable membrane remaining on the coating surface of the semipermeable membrane support is 500 $\mu$m$^2$ or less, and a residual ratio of the semipermeable membrane is 2.5% or more and 5.0% or less.

2. A semipermeable membrane support comprising a wet nonwoven fabric containing main synthetic fibers and binder synthetic fibers, wherein

a number of loose fibers in a tape peeling test is 30 or less, and
a level difference of a core portion obtained by measuring surface roughness of a coating surface on which a semipermeable membrane is provided using a confocal laser microscope is 14 $\mu$m or less.

3. The semipermeable membrane support according to claim 1 or 2, wherein an antimony element elution amount in the main synthetic fibers or the binder synthetic fibers is less than 5 $\mu$g/g.

4. The semipermeable membrane support according to claim 1 or 2, wherein an antimony element elution amount of the semipermeable membrane support is less than 1.5 $\mu$g/g.

5. A method for manufacturing the semipermeable membrane support according to any one of claims 1 to 4, the method comprising
manufacturing the semipermeable membrane support by a wet papermaking method from fiber dispersion liquid obtained by dispersing binder synthetic fibers and then dispersing main synthetic fibers.

## INTERNATIONAL SEARCH REPORT

| | International application No. |
|---|---|
| | **PCT/JP2022/014217** |

**A. CLASSIFICATION OF SUBJECT MATTER**

***B01D 69/10***(2006.01)i; ***B01D 69/12***(2006.01)i; ***D21H 13/24***(2006.01)i
FI: B01D69/10; D21H13/24; B01D69/12

According to International Patent Classification (IPC) or to both national classification and IPC

**B. FIELDS SEARCHED**

Minimum documentation searched (classification system followed by classification symbols)

B01D53/22; B01D61/00-71/82; C02F1/44; D21H11/00-27/42; D04H1/00-18/04; B32B1/00-43/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-163321 A (MITSUBISHI PAPER MILLS LTD.) 08 October 2020 (2020-10-08) claims, examples | 1-5 |
| A | JP 2019-118907 A (MITSUBISHI PAPER MILLS LTD.) 22 July 2019 (2019-07-22) claims, examples | 1-5 |
| A | JP 2012-161725 A (DAIO PAPER CORP.) 30 August 2012 (2012-08-30) claims, examples | 1-5 |
| A | JP 2017-170293 A (MITSUBISHI PAPER MILLS LTD.) 28 September 2017 (2017-09-28) claims, examples | 1-5 |
| A | JP 2014-128769 A (DAIO PAPER CORP.) 10 July 2014 (2014-07-10) claims, examples | 1-5 |
| A | JP 2010-194478 A (TEIJIN FIBERS LTD.) 09 September 2010 (2010-09-09) claims, examples | 1-5 |

☑ Further documents are listed in the continuation of Box C.      ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 April 2022** | **10 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2022/014217**

**C.    DOCUMENTS CONSIDERED TO BE RELEVANT**

| Category* | Citation of document, with indication, where appropriate, of the relevant passages | Relevant to claim No. |
|---|---|---|
| A | US 6156680 A (BBA NONWOVENS SIMPSONVILLE, INC.) 05 December 2000 (2000-12-05)<br>claims | 1-5 |

Form PCT/ISA/210 (second sheet) (January 2015)

**INTERNATIONAL SEARCH REPORT**
**Information on patent family members**

International application No.

**PCT/JP2022/014217**

| Patent document cited in search report | | | Publication date (day/month/year) | Patent family member(s) | Publication date (day/month/year) |
|---|---|---|---|---|---|
| JP | 2020-163321 | A | 08 October 2020 | (Family: none) | |
| JP | 2019-118907 | A | 22 July 2019 | (Family: none) | |
| JP | 2012-161725 | A | 30 August 2012 | (Family: none) | |
| JP | 2017-170293 | A | 28 September 2017 | (Family: none) | |
| JP | 2014-128769 | A | 10 July 2014 | (Family: none) | |
| JP | 2010-194478 | A | 09 September 2010 | (Family: none) | |
| US | 6156680 | A | 05 December 2000 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002095937 A
- JP 10225630 A
- JP 2008238147 A
- JP 4021526 B
- WO 2014192883 A
- WO 2012090874 A
- JP 2016159197 A
- JP 2018153758 A